# EUROPEAN PATENT SPECIFICATION

(11) **EP 4 528 127 B1**
(45) Date of publication and mention of the grant of the patent: **14.10.2026**
(21) Application number: 23819924.4
(22) Date of filing: 09.06.2023
(51) Int. Cl.: F16H 3/089, F16H 63/30, F16H 57/04

(54) **TRANSMISSION**
GETRIEBE
DISPOSITIF DE CHANGEMENT DE VITESSE

(30) Priority: 09.06.2022 WO PCT/JP2022/023251
(43) Date of publication of application: 26.03.2025
(73) Proprietor: Yamaha Hatsudoki Kabushiki Kaisha, Iwata-shi, Shizuoka 438-8501 (JP)
(72) Inventor: OSAWA, Kenta, Iwata-shi, Shizuoka 438-8501 (JP); NAITO, Shinji, Iwata-shi, Shizuoka 438-8501 (JP); HOSHINA, Taiji, Iwata-shi, Shizuoka 438-8501 (JP); HIROSE, Ryotaro, Iwata-shi, Shizuoka 438-8501 (JP)
(74) Representative: Zimmermann, Tankred Klaus
(86) International application number: PCT/JP2023/021599
(87) International publication number: WO 2023/238944

(56) References cited:
- WO-A1-2020/250535
- WO-A1-2020/250535
- JP-A- 2011 102 555
- JP-A- 2011 113 653
- JP-A- 2011 113 653
- JP-A- 2021 014 895
- JP-A- 2021 014 895
- JP-A- H05 321 955
- JP-A- S6 392 212

## Description

### [Technical Field]

The present invention relates to a transmission capable of performing seamless shift up.

A transmission capable of performing seamless shift up has been known. The transmission includes an input shaft connected to a driving source and an output shaft connected to a driving target. On the input shaft and the output shaft, shift gears are provided to be rotatable relative to one another. The shift gears are provided to correspond to speed stages in number, and are arranged so that transmission ratios are different between the speed stages. The transmission allows selection of a shift gear that is rotated together with the input shaft or the output shaft. Through the selected shift gear, power is transmitted from the input shaft to the output shaft.

For example, Patent Literature 1, on which the two-part form is based, discloses a transmission which is capable of performing seamless shift up. The transmission of Patent Literature 1 is arranged so that, when shifting up, two sliders are temporarily connected to the shift gear at the same time. In the transmission of Patent Literature 1 in this state, a force in an axial direction is generated to cancel the connection of one of the two sliders. With this arrangement, seamless shift up is achieved without interrupting the transmission of power. In addition to this, the transmission of Patent Literature 1 is provided with a cam biasing mechanism that is provided on each of an input shaft and an output shaft so as to make contact with a cam surface on the slider. As the cam biasing mechanism is pressed onto the cam surface of the slider, the slider receives a force acting toward the shift gear. When a torque transmitted to the transmission is changed from a drive torque to a coast torque, the slider can be moved by the cam biasing mechanism from a drive meshed position to a coast meshed position. Further, Patent Literature 2 discloses a dial switch enhancing uniformity of a click feeling of turning a dial knob. A difference between an outside diameter of the inner shaft and an inside diameter of the coil spring is smaller than a difference between the inside diameter of the outer wall and the outside diameter of the coil spring. With this configuration, the difference in length (axial length difference) in the direction of the movement path between the inner shaft that holds the compression coil spring and the outer wall that stabilizes the posture of the plunger, i.e., the direction of the central axis of the compression coil spring, can stabilize the posture of the compression coil spring and the plunger while ensuring the effective length of the compression coil spring.

### [Citation List]

### [Patent Literatures]

[Patent Literature 1] WO 2020/250535 A1
[Patent Literature 2] JP 2011 113653 A

### [Summary]

### [Technical Problem]

A cam biasing mechanism of Patent Literature 1 is formed of a ball and a coil spring. A part of the ball and a majority of the coil spring are accommodated in a clutch hub that is provided at the outer circumferences of the input shaft and the output shaft, in order to exert an elastic force of the coil spring to the ball. End portions of the coil spring are fitted into recesses formed in outer circumferential surfaces of the input shaft and the output shaft, respectively. The ball protrudes from the clutch hub and is in contact with a cam surface formed on a slider. As the ball makes contact with the cam surface, a radial force exerted to the cam surface is converted to a force acting in the axial direction of the input shaft and the output shaft. To put it differently, the ball of the cam biasing mechanism makes contact with the cam surface and presses the slider in the axial direction, with the result that the slider is moved.

To improve the elastic force exerted to the cam surface of the slider, the number of springs of the cam biasing mechanism may be increased or each spring of the cam biasing mechanism may be elongated. However, when the number of springs is increased, the strength and rigidity of the input shaft and the output shaft are deteriorated because the number of the recesses formed in the outer circumferential surfaces of the input shaft and the output shaft is increased. When each spring is elongated, the transmission is disadvantageously upsized because the cam biasing mechanism is upsized.

An object of the present invention is to increase the elastic force of a spring of a cam biasing mechanism when the spring is in contact with a cam surface and presses a slider in an axial direction and to downsize a transmission capable of performing seamless shift up, while maintaining both the strength and rigidity of an input shaft and an output shaft. The invention is set out in the appended set of claims.

### [Solution to Problem]

A transmission of an embodiment of the present invention is defined in claim 1. The transmission, which is a constant mesh transmission, comprises: an input shaft connectable to a driving source and an output shaft connectable to a driving target, on the input shaft and the output shaft, shift gears being provided to be each rotatable relative to the input shaft or the output shaft and immovable in an axial direction of the input shaft and the output shaft, the shift gears corresponding to speed stages in number, on the input shaft and the output shaft, sliders being provided to be each rotatable together with the input shaft or the output shaft, movable in the axial direction of the input shaft and the output shaft by a shift fork, and connectable to at least one of the shift gears, two of the sliders being temporarily in a state of being connected simultaneously with two of the shift gears when shifting up, and when the state of being simultaneously connected is established, a force of canceling connection of one of the two sliders being generated, at least one cam biasing mechanism being provided on at least one of the input shaft or the output shaft to impart an elastic force to at least one of the sliders in a radial direction of the input shaft or the output shaft, the at least one of the sliders having cam surfaces each of which is arranged to convert the elastic force exerted in the radial direction by the at least one cam biasing mechanism into a force acting in the axial direction, power being transmitted from the input shaft to the output shaft through one of the shift gears connected to one of the sliders moved by the shift fork, at least one of the input shaft or the output shaft including: a lubricating oil passage which is formed along the axial direction and allows lubricating oil to flow in the lubricating oil passage; and at least one cam biasing mechanism accommodation unit each of which accommodates part of the at least one cam biasing mechanism, the at least one cam biasing mechanism accommodation unit being formed of communication holes each of which has an opening portion formed in an outer circumferential surface of the input shaft or the output shaft and is connected to the lubricating oil passage at an end on the opposite side of the opening portion, and when, in a cross section orthogonal to the axial direction, ends of the opening portion of each of the communication holes formed in the outer circumferential surface of the input shaft or the output shaft are opening edges, each of the communication holes is formed so that a first arc that is an arc between the opening edges neighboring each other in the circumferential direction of the outer circumferential surface and excludes the opening portion of any of the communication holes being longer than a second arc that is an arc between the opening edges at the respective ends of one of the communication holes, and the at least one cam biasing mechanism including: springs at least part of each of which is provided in the communication holes each of which is formed so that the first arc is longer than the second arc, each of the springs being configured to impart the elastic force to the cam surfaces of the slider; and a support member which is at least partially provided in the lubricating oil passage so that the support member is in contact with the springs and intersects with the lubricating oil passage.

According to this embodiment, at least part of the spring constituting the at least one cam biasing mechanism is provided in the communication hole formed in the input shaft or the output shaft. In other words, the spring is at least partially accommodated in the input shaft or the output shaft. Because the communication hole is formed inside the input shaft or the output shaft, the length in the radial direction of the hole accommodating the spring can be easily elongated as compared to a case where a hole accommodating a spring is formed in a component provided on the outer circumference of the input shaft or the output shaft. It is therefore easy to ensure the spring to be sufficiently long and have a sufficient elastic force. Furthermore, according to the embodiment above, because the spring is at least partially provided in the communication hole connected to the lubricating oil passage at an end on the opposite side of the opening portion, the spring can be elongated as compared to a case where the spring is at least partially provided in a recess that has an opening portion in the outer circumferential surface of at least one of the input shaft or the output shaft and does not communicate with the lubricating oil passage. This arrangement makes it possible to secure the elastic force of the spring even if the communication hole is short in diameter.

If, being different from the embodiment above, the spring is partially provided in the lubricating oil passage so that the spring intersects with the lubricating oil passage, a part of the spring which is inside the lubricating oil passage tends to be deformed in a direction different from the elongation-contraction direction, e.g., in the axial direction. In this regard, in the embodiment above, the support member is at least partially provided in the lubricating oil passage so that the support member intersects with the lubricating oil passage. On this account, the deformation of the spring in a direction different from the elongation-contraction direction is suppressed and hence the spring can smoothly elongate and contract, with the result that the elastic force of the spring is ensured.

Furthermore, in the cross section orthogonal to the axial direction, the communication hole in which at least part of the spring is provided is formed so that the length of the first arc at the outer circumferential surface of the input shaft or the output shaft is longer than the second arc. This embodiment makes it possible to secure both the strength and rigidity of the input shaft and the output shaft in which the spring is at least partially accommodated in the communication hole. Furthermore, because the communication hole is formed inside at least one of the input shaft or the output shaft, the transmission is downsized in the axial direction and the radial direction, because, as compared to a case where a communication hole is formed in a component provided on the outer circumference of at least one of the input shaft or the output shaft, such a component is not required. It is therefore possible to downsize the transmission.

As described above, in the transmission of the present invention, it is possible to perform seamless shift up and to increase the elastic force of the spring of the at least one cam biasing mechanism when the spring is in contact with the cam surface and presses the slider in the axial direction, while maintaining both the strength and rigidity of the input shaft and the output shaft.

Preferred embodiments of the present invention are laid down in the dependent claims.

In addition to the embodiment above, the transmission of a preferred embodiment of the present invention may be arranged as described below.

Each of the sliders is configured to be moved in the axial direction by the shift fork from a standby position where the slider is unconnected to the shift gear, and each of the cam surfaces converts the elastic force exerted in the radial direction by the cam biasing mechanism to a force which is exerted in the axial direction to move a slider having the cam surface in a direction opposite to a direction toward the standby position from a position to which the slider is moved by the shift fork.

According to this embodiment without using the shift fork, the slider can be moved away from the standby position from a position to which the slider has been moved by the shift fork, by an elastic force of the at least one cam biasing mechanism. In a transmission capable of performing seamless shift up as in Patent Literature 1, when, for example, a torque transmitted to the transmission is changed from a drive torque to a coast torque, the slider may be required to be moved from a drive meshed position to a coast meshed position. The above-described arrangement makes it possible to deal with such a case.

In addition to the embodiments above, the transmission of a preferred embodiment of the present invention may be arranged as described below. The at least one cam biasing mechanism accommodation unit is formed of two communication holes formed along a single linear line intersecting with a central axial line of the input shaft or the output shaft, and the at least one of the sliders has two cam surfaces which simultaneously receive the elastic force from the cam biasing mechanism.

According to this embodiment, it is possible to provide the support member along one linear line across the two communication holes and the lubricating oil passage. Furthermore, in the embodiment described above, as the at least one cam biasing mechanism, which includes two springs corresponding to the respective two communication holes and the support member, is inserted from one side of the two communication holes, it is possible to provide the at least one cam biasing mechanism in a space that is along one linear line extending across the two communication holes and the lubricating oil passage. This makes it easy to attach the at least one cam biasing mechanism to at least one of the input shaft or the output shaft.

Furthermore, the cam biasing mechanism is structurally simple, and the support member can be shortened. When the support member is shortened, it is easy to arrange the spring to be sufficiently long and have a sufficient elastic force.

In addition to the above, because one cam biasing mechanism accommodation unit is formed of two communication holes, the strength and rigidity of at least one of the input shaft or the output shaft can be improved as compared to a case where one cam biasing mechanism accommodation unit is formed of three or more communication holes.

In addition to the embodiments above, the transmission of a preferred embodiment of the present invention may be arranged as described below. The at least one cam biasing mechanism includes contact members each of which accommodates at least part of each of the springs, each of which is at least partially provided in the communication hole, and each of which makes contact with a cam surface.

According to this embodiment, the spring can be further elongated as the spring is at least partially accommodated in the contact member, as compared to a case where the at least one cam biasing mechanism includes a contact member not accommodating the spring at all, such as a ball recited in Patent Literature 1. Due to this, in the transmission of the present invention, it is possible to further increase the elastic force of the spring of the cam biasing mechanism when making contact with the cam surface and pressing the slider.

When the spring is accommodated in the contact member, the spring is not exposed to the lubricating oil passage even if the spring accommodated in the contact member is at least partially provided in the lubricating oil passage. On this account, the deformation of the spring in a direction different from the elongation-contraction direction is further reliably suppressed and hence the spring can smoothly elongate and contract, with the result that the elastic force of the spring is ensured.

In addition to the embodiment above, the transmission of a preferred embodiment of the present invention may be arranged as described below.

Each of the communication holes is circular in shape in a cross section orthogonal to a central axial line passing through the center of each of the communication holes, each of the contact members has a protruding surface section making contact with the cam surface and a cylindrical section integrated with the protruding surface section, and the protruding surface section is formed as a part of a spherical surface.

When a ball making contact with the cam surface is provided as in Patent Literature 1 in place of the contact member having the protruding surface section and the cylindrical section, the curvature radius of the ball must be set in accordance with the angle of the cam surface and the moving distance of the slider, in order to secure the moving distance of the contact member in the radial direction of the input shaft or the output shaft at the time of movement of the slider. In this case, because the curvature radius of the ball is set in accordance with the moving distance of the slider, when the checking groove with which the contact member is fitted is formed in the slider, the load applied from the ball to the checking groove as resistance against the movement of the slider in the axial direction may be not easily adjusted. In this regard, in the structure in which the contact member has the protruding surface section and the cylindrical section, because the cylindrical section is supported by a wall surface of the communication hole and movable in the radial direction of the input shaft or the output shaft, it is unnecessary to change the curvature radius of the protruding surface section in order to secure the moving distance of the contact member in the radial direction of the input shaft or the output shaft due to the movement of the slider, and hence the shape of the protruding surface section can be set at will. Due to this, when the checking groove with which the contact member is fitted is formed in the slider, the degree of freedom in designing the shape of the protruding surface section of the contact member and the shape of the checking groove corresponding to the protruding surface section of the contact member is high, and hence the resistance against the movement in the axial direction of the slider in the state in which the contact member is fitted with the checking groove is easily controllable.

In addition to the embodiment above, the transmission of a preferred embodiment of the present invention may be arranged as described below.

The curvature radius of the protruding surface section of each of the contact members is longer than the radius of each of the communication holes.

When a ball making contact with the cam surface is provided as in Patent Literature 1 in place of the contact member having the protruding surface section and the cylindrical section, if, for example, it is desired to increase the moving distance of the slider without changing the angle of the cam surface, it is necessary to secure the moving distance of the contact member in the radial direction of the input shaft or the output shaft by increasing the curvature radius of a part of the contact member where the contact member is in contact with the cam surface. Meanwhile, the curvature radius of the ball is more or less identical with the radius of the communication hole. On this account, to increase the curvature radius of the ball, the radius of the communication hole needs to be increased. When the radius of the communication hole is increased, it may be difficult to secure the strength and rigidity of the input shaft and the output shaft.

In this regard, in the structure in which the contact member has the protruding surface section and the cylindrical section, when, for example, the checking groove with which the contact member is fitted is formed in the slider and the curvature radius of the protruding surface section is increased to adjust the load applied from the contact member to the checking groove as resistance against the movement of the slider in the axial direction, it is unnecessary to increase the radius of the communication hole. On this account, when the curvature radius of the part of the contact member which is in contact with the cam surface is arranged to be longer than the radius of the communication hole in the transmission, both of the strength and rigidity of the input shaft and the output shaft can be secured by avoiding the radius of the communication hole from becoming long.

In addition to the embodiment above, the transmission of a preferred embodiment of the present invention may be arranged as described below.

Each of the communication holes is circular in shape in a cross section orthogonal to a central axial line passing through the center of each of the communication holes, each of the contact members accommodates each of the springs and an end portion of the support member, and the end portion of the support member, which is accommodated in each of the contact members, has a large diameter portion that is longer in diameter than an open end of each of the contact members.

With this embodiment, because the end portion of the support member which is accommodated in the contact member has the large diameter portion that is longer in diameter than the open end of the contact member, the support member does not come out from the contact member. It is therefore easy to attach, to the input shaft or the output shaft, the cam biasing mechanism formed of the contact member, the springs, and the support member.

With the embodiment above, furthermore, because the contact member and the support member are connected by a simple structure, the space in which the spring is accommodated can be easily secured in the contact member. It is therefore easy to ensure the spring to be sufficiently long and have a high elastic force.

In addition to the embodiments above, the transmission of a preferred embodiment of the present invention may be arranged as described below.

The support member has an oil hole through which lubricating oil flows from the lubricating oil passage toward each of the springs, and the cam biasing mechanism is arranged to cause a hydraulic pressure of the lubricating oil flowing out from the oil hole of the support member to act on each of the cam surfaces.

With this embodiment, the lubricating oil in the lubricating oil passage flows into the oil hole, and the lubricating oil having flown into the oil hole flows toward the spring through the oil hole. When pressurized lubricating oil is supplied to the lubricating oil passage, the load on the cam surface from the at least one cam biasing mechanism is not only the elastic force of the spring but also the hydraulic pressure of the lubricating oil, with the result that the load with which the at least one cam biasing mechanism presses the slider in the axial direction is further increased. In this case, because the elastic force of the spring is allowed to be small as compared to a case where no oil hole is provided, the strength and rigidity of the input shaft or the output shaft can be improved by decreasing the diameter of the communication hole or decreasing the number of the communication holes as compared to the case where no oil hole is provided.

In addition to the embodiments above, the transmission of a preferred embodiment of the present invention may be arranged as described below.

On the outer circumferential surface of the input shaft or the output shaft, a spline having recesses and protrusions which are alternately provided in the circumferential direction is formed, the at least one of the sliders is fitted with the spline to be movable in the axial direction, when the center of each of the communication holes passes through one of the recesses, a cutout is formed in the spline so that two protrusions neighboring the recess passing through the center of the communication hole form a counterbored shape or two protrusions neighboring the recess passing through the center of the communication hole form a countersunk shape in the axial direction, and when the center of each of the communication holes passes through one of the protrusions, a cutout is formed in the spline so that the protrusion passing through the center of each of the communication holes forms a countersunk shape.

According to this embodiment, the spline having the recesses and the protrusions is formed in the outer circumferential surface of at least one of the input shaft or the output shaft. When the center of the communication hole passes through the recess, the spline has cutouts with which the two protrusions neighboring the recess passing through the center of the communication hole form a counterbored shape. Alternatively, when the center of the communication hole passes through the recess, the spline has cutouts with which the two protrusions neighboring the recess passing through the center of the communication hole form a countersunk shape in the axial direction. When the counterbored cutouts are formed in the two protrusions neighboring the recess passing through the communication hole, it is possible to arrange the diameter of the communication hole to be longer than the width of the recess. When the countersunk cutouts are formed in the axial direction in the two protrusions neighboring the recess passing through the communication hole, it is possible to avoid the concentration of stress at a part of the protrusion which is close to the opening edge of the communication hole. This makes it possible to increase the strength of at least one of the input shaft or the output shaft.

Alternatively, when the center of the communication hole passes through the protrusion, the spline has cutouts with which the protrusion passing through the center of the communication hole forms a countersunk shape in the axial direction. When the countersunk cutouts are formed in the axial direction in the protrusion passing through the communication hole, it is possible to avoid the concentration of stress at an opening edge of an accommodating hole provided at the protrusion.

In addition to the embodiments above, the transmission of a preferred embodiment of the present invention may be arranged as described below. The sliders are slide gears each of which has a gear tooth surface engaged with one of the shift gears.

According to this embodiment, it is possible to shorten the input shaft and the output shaft as compared to a case where the sliders do not have a gear tooth surface engaged with the shift gear and a gear having a gear tooth surface engaged with a shift gear is additionally provided. Furthermore, the number of components is reduced and the structure of the transmission is simplified. As a result, it is possible to suppress the transmission from becoming upsized.

### <Definition of Transmission>

In the present invention and the embodiments, a transmission is provided on at least part of a power transmission path. The power transmission path is a path through which power is transmitted from a driving source to a driving target. The transmission is configured to change a transmission ratio. The transmission ratio is a ratio of rotation speed of an input shaft of the transmission to rotation speed of an output shaft of the transmission. The transmission may include a transmission device configured to change a transmission ratio and a speed reducer configured to reduce the rotation speed of power output from the transmission device, by means of gears, etc. The reduction ratio of the speed reducer is unchanged. In the present invention and the description, the transmission is a multistage transmission which has plural shift gears that are immovable in the axial direction of each of the input shaft and the output shaft and correspond to speed stages in number, and which is configured to transmit power from the input shaft to the output shaft through a shift gear corresponded to a selected speed stage. The transmission of the present invention and the description does not include a continuously variable transmission device having no shift gear. The transmission of the present invention and the embodiments may include an auxiliary transmission.

In the present invention and the embodiments, the transmission is a multistage transmission. In the present invention and the embodiments, the transmission is a non-synchronous transmission. In the present invention and the embodiments, the transmission is a constant-mesh transmission. In the present invention and the embodiments, the transmission may be an AMT (Automated Manual installation) or an MT (Manual Transmission). The AMT is also known as a semi-automatic transmission.

In the present invention and the embodiments, the transmission is mounted on a vehicle, for example. The vehicle on which the transmission is mounted may be a straddled vehicle or an automobile. The straddled vehicle includes a motorcycle, a motor tricycle, a four-wheeled buggy (ATV: All Terrain Vehicle), a snowmobile, and a personal watercraft, for example. The motorcycle includes a scooter, an engine-equipped bicycle, a moped, etc. In the present invention and the embodiments, for example, the transmission may be mounted on an apparatus such as an agricultural machine, which is not a vehicle.

### <Definition of Driving Source>

In the present invention and the description, the driving source is a power source for driving a driving target. The driving target is a vehicle, for example, and is at least one driving wheel among at least one front wheel or at least one rear wheel. The driving source may include an engine. The driving source may include an engine and an electric motor. The driving source may include an engine and an electric motor with a power generation function of generating power by the output of the engine (or a generator and an electric motor). In this case, the output of the engine may be used solely for the power generation.

### <Definition of Axial Direction>

In the present invention and the embodiments, the axial direction of each of the input shaft and the output shaft is a direction in parallel to each of the rotational central axis of the input shaft and the rotational central axis of the output shaft.

### <Definition of Cam Biasing Mechanism>

In the present invention and the description, a cam biasing mechanism may be any mechanism as long as it applies an elastic force to a cam surface of a slider in the radial direction of an input shaft and an output shaft. The spring may be a coil spring or a disc spring.

### <Definition of Support Member>

A support member which is at least partially provided in the lubricating oil passage to intersect with the lubricating oil passage is a support member which is provided so that parts of the lubricating oil passage exist on the respective sides of the support member in the axial direction of the input shaft or the output shaft.

In the present invention and the description, when each of the at least one slider has two cam surfaces simultaneously receiving an elastic force from the cam biasing mechanism, a slider having cam surfaces has two cam surfaces which simultaneously receive an elastic force from the cam biasing mechanism. The expression "a slider having cam surfaces has two cam surfaces which simultaneously receive an elastic force from the cam biasing mechanism" encompasses a case where a slider having cam surfaces has two cam surfaces which simultaneously receive an elastic force from the cam biasing mechanism and does not have any other cam surface and a case where, in addition to two cam surfaces which simultaneously receive an elastic force from the cam biasing mechanism, a slider having cam surfaces has another cam surface which does not receive an elastic force from the cam biasing mechanism when the two cam surfaces are receiving an elastic force from the cam biasing mechanism.

In the claims, when the number of a constituent feature is not clearly specified and the constituent feature is expressed in a singular form in English, the number of the constituent feature may be more than one in the present invention. In the present invention, the number of the constituent features may be only one.

In the present invention and the embodiments, terms "including", "comprising", "having", and derivatives thereof are used to encompass not only listed items and equivalents thereof but also additional items.

In the present invention and the embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this specification and claims indicate meanings typically understood by a person with ordinary skill in the art in the technical field to which the present invention belongs. Terms such as those defined in commonly used dictionaries are to be interpreted as having meaning that is consistent with their meaning in the context of the relevant art and the present invention, and are not to be interpreted in an idealized or excessively formal sense.

In the present invention and the embodiments, the term "preferable" is non-exclusive. The term "preferable" means "preferable but not limited to". In this specification, an arrangement which is "preferable" exerts at least the above-described effects of the arrangement of claim 1. In this specification, the term "may" is non-exclusive. The term "may" indicates "may but not must". In this specification, an arrangement which is explained by using the term "may" exerts at least the above-described effects of the arrangement of claim 1.

### [Advantageous Effects]

A transmission of the present invention is able to increase the elastic force of a spring of a cam biasing mechanism when the spring is in contact with a cam surface and presses a slider in an axial direction and to downsize the transmission, while maintaining both the strength and rigidity of an input shaft and an output shaft.

### [Brief Description of Drawings]

FIG. 1 includes schematic diagrams illustrating a structure of a transmission of the First Embodiment.
FIG. 2A to FIG. 2E include schematic diagrams illustrating movement of a slider in the Second Embodiment.
FIG. 3A is a schematic diagram illustrating the arrangement of a cam biasing mechanism of the Third Embodiment, whereas FIG. 3B is a schematic diagram illustrating the arrangement of a cam biasing mechanism of the Fourth Embodiment.
FIG. 4A is a schematic diagram illustrating the arrangement of a cam biasing mechanism of the Fifth Embodiment, whereas FIG. 4B is a schematic diagram illustrating the arrangement of a cam biasing mechanism of the Sixth Embodiment.
FIG. 5A is a schematic diagram illustrating the arrangement of a cam biasing mechanism of the Seventh Embodiment, whereas FIG. 5B is an enlarged view of a part of FIG. 5A.
FIG. 6A is a cross section taken along the axial direction of part of a transmission of the Seventh Embodiment, whereas FIG. 6B is a drawing for illustrating how a cam biasing mechanism and a slider are attached to a power transmission shaft.
FIG. 7A to FIG. 7F include schematic diagrams illustrating parts of the arrangement of a transmission of the Eighth Embodiment.
FIG. 8 is a cross section taken along the axial direction of a transmission of the Ninth Embodiment.
FIG. 9A to FIG. 9F include developed sectional views of a shift gear and a slide gear of a transmission of the Ninth Embodiment.

### [Description of Embodiments]

### [First Embodiment]

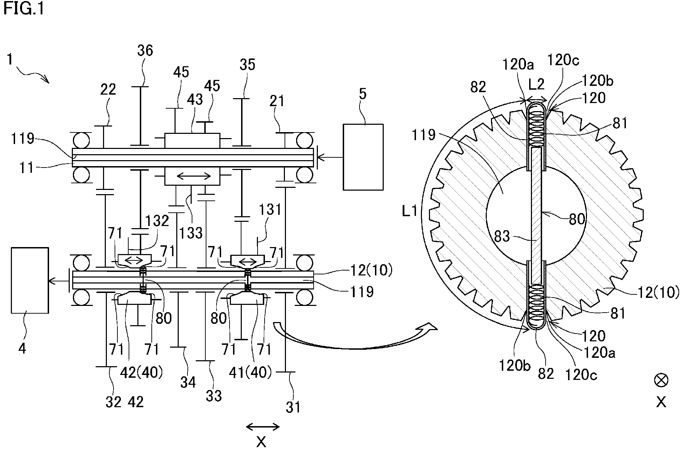

The following will describe a transmission 1 of the First Embodiment of the present invention with reference to FIG. 1. FIG. 1 shows an example of the transmission 1 of the First Embodiment.

The transmission 1 includes an input shaft 11 and an output shaft 12. The transmission 1 is configured to be able to transmit power of the input shaft 11 to the output shaft 12. The input shaft 11 is connected to a driving source 5. On the input shaft 11 and the output shaft 12, shift gears 31, 32, 33, 34, 35, and 36 are provided to correspond to speed stages in number. In other words, on the input shaft 11 or the output shaft 12, shift gears 31, 32, 33, 34, 35, and 36 are provided to correspond to speed stages in number. In the example shown in FIG. 1, the highest speed stage is the sixth speed stage. Each of the shift gears 31, 32, 33, 34, 35, and 36 is provided to be rotatable relative to the input shaft 11 or the output shaft 12 and immovable in the axial direction of the input shaft 11 or the output shaft 12. The shift gears 31, 32, 33, 34, 35, and 36 are a first speed gear, a second speed gear, a third speed gear, a fourth speed gear, a fifth speed gear, and a sixth speed gear, respectively. In FIG. 1, an arrow W indicates the axial direction of each of the input shaft 11 and the output shaft 12. In the descriptions below, an axial direction indicates the axial direction of each of the input shaft 11 and the output shaft 12.

On the input shaft 11 and the output shaft 12, sliders 41, 42, and 43 are provided. Each of the sliders 41, 42, and 43 is provided to be rotatable together with the input shaft 11 or the output shaft 12 and movable in the axial direction. Each of the sliders 41, 42, and 43 is connectable to at least one of the shift gears 31 to 36. The slide gears 41, 42, and 43 are connected to the shift forks 131, 132, and 133, respectively. The sliders 41, 42, and 43 are moved by the shift forks 131, 132, and 133, respectively. Through one of the shift gears 31 to 36 connected to one of the sliders 41, 42, and 43, power is transmitted from the input shaft 11 to the output shaft 12.

Two of the sliders 41, 42, and 43 are arranged to be temporarily in a state of being simultaneously connected to two shift gears among the shift gears 31 to 36, when shift up is performed. To these two sliders, a force of canceling the connection of one of the two sliders is exerted when the sliders are simultaneously connected to two shift gears among the shift gears 31 to 36. On this account, the transmission 1 is able to perform seamless shift up without interrupting the power. In the example shown in FIG. 1, the transmission 1 is arranged to be able to seamlessly perform shift up to the second speed stage, the third speed stage, and the fourth speed stage.

At least one of the input shaft 11 or the output shaft 12 includes a lubricating oil passage 119 and at least one cam biasing mechanism accommodation unit. The cam biasing mechanism accommodation unit is formed of plural communication holes 120. The communication holes 120 forming one cam biasing mechanism accommodation unit are formed in one cross section that is orthogonal to the axial direction. In the example shown in FIG. 1, the lubricating oil passages 119 are formed in both the input shaft 11 and the output shaft 12, and two cam biasing mechanism accommodation units are formed in the output shaft 12. In the example shown in FIG. 1, one cam biasing mechanism accommodation unit has two communication holes 120. Among the input shaft 11 and the output shaft 12, at least one of these shafts that has both the lubricating oil passage 119 and the cam biasing mechanism accommodation unit will be collectively termed a power transmission shaft 10. The lubricating oil passage 119 is formed in the power transmission shaft 10 along the axial direction. Lubricating oil flows in the lubricating oil passage 119. Each of the communication holes 120 has an opening portion 120c formed in the outer circumferential surface of the power transmission shaft 10. Each of the communication holes 120 is connected to the lubricating oil passage 119 at an end that is opposite to the opening portion 120c. While in the example of FIG. 1 the communication holes 120 are identical in size and shape, the invention is not limited to this arrangement. The communication holes 120 may include two communication holes that are different in size. The communication holes 120 may include two communication holes that are different in shape.

Each of the communication holes 120 is arranged so that, in a cross section orthogonal to the axial direction, the length L1 of a first arc is longer than the length L2 of a second arc. The first arc and the second arc are defined as below, with the assumption that, in a cross section orthogonal to the axial direction, ends of the opening portion 120c of the communication hole 120 formed in the outer circumferential surface of the power transmission shaft 10 are opening edges 120a and 120b. The first arc is an arc between the opening edge 120a and the opening edge 120b neighboring each other in the circumferential direction of the outer circumferential surface, and does not include any opening portions 120c of the communication holes 120. The second arc is an arc between the opening edges 120a and 120b at the respective ends of one communication hole 120. In the example of FIG. 1, the communication holes 120 are provided at regular intervals in the circumferential direction in a cross section orthogonal to the axial direction. The invention, however, is not limited to this arrangement. The communication holes 120 may be provided at irregular intervals in the circumferential direction. In this case, the minimum length of the first arc is arranged to be longer than the maximum length of the second arc.

The transmission 1 includes at least one cam biasing mechanism 80. Parts of the cam biasing mechanism 80 are accommodated in the communication holes 120. The remaining part of the cam biasing mechanism 80 is accommodated in the lubricating oil passage 119. The cam biasing mechanism accommodation unit is provided for each cam biasing mechanism 80. On this account, at least one cam biasing mechanism 80 is provided on at least one of the input shaft 11 or the output shaft 12. The cam biasing mechanism 80 is arranged to impart an elastic force in the radial direction of the power transmission shaft 10 to one of the sliders 41, 42, and 43. In the example shown in FIG. 1, two cam biasing mechanisms 80 are provided for the sliders 41 and 42 on the output shaft 12.

The cam biasing mechanism 80 includes springs 81 and one support member 83. At least part of each spring 81 is provided in the communication hole 120. The spring 81 is provided for each communication hole 120. To put it differently, the number of springs 81 included in one cam biasing mechanism 80 is identical with the number of communication holes 120 constituting the cam biasing mechanism accommodation unit provided for that cam biasing mechanism 80. Each spring 81 is arranged to be able to elongate and contract in the radial direction of the power transmission shaft 10. The support member 83 is at least partially in the lubricating oil passage 119 so that the support member 83 is in contact with the springs 81 and intersects with the lubricating oil passage 119. In the example in FIG. 1, the support member 83 has a portion in the lubricating oil passage 119 and portions in the communication holes 120. Alternatively, the support member 83 may be entirely in the lubricating oil passage 119.

At least one of the sliders 41, 42, and 43 has a cam surface 71. The at least one slider having the cam surface 71 among the sliders 41, 42, and 43 will be collectively termed a slider 40. In the example of FIG. 1, each of two sliders 41 and 42 has the cam surface 71. The number of sliders 40 having the cam surface 71 may be one, or may be more than one. The cam surface 71 is formed on one of the two sliders simultaneously connected to two shift gears when shifting up, to which a force of canceling the connection is applied. The cam surface 71 makes contact with the cam biasing mechanism 80 so as to convert an elastic force exerted in the radial direction from the cam biasing mechanism 80 to a force exerted in the axial direction. The cam biasing mechanism 80 is provided for each slider 40 having the cam surface 71.

Each slider 40 has plural cam surfaces 71. In the example of FIG. 1, each of the two sliders 41 and 42 has four cam surfaces 71. The springs 81 included in the cam biasing mechanism 80 impart elastic forces to the cam surfaces 71 of the slider 40. For example, as shown in FIG. 1, the number of springs 81 in the cam biasing mechanism 80 may be half as many as the number of cam surfaces 71 in the slider 40. In this case, half of the cam surfaces 71 of the slider 40 simultaneously make contact with the cam biasing mechanism 80. The number of springs 81 in the cam biasing mechanism 80 may be identical with the number of cam surfaces 71 in the slider 40. In this case, the cam surfaces 71 of the slider 40 simultaneously make contact with the cam biasing mechanism 80.

In the example shown in FIG. 1, the power transmission shaft 10 (the input shaft 11 or the output shaft 12) has two communication holes 120 for one cam biasing mechanism 80. The two communication holes 120 are deviated from each other by about 180 degrees in the circumferential direction of the power transmission shaft 10. To put it differently, the cam biasing mechanism accommodation unit is composed of two communication holes 120 formed along a single linear line intersecting with the central axial line of the power transmission shaft 10. In this way, the two communication holes 120 and part of the lubricating oil passage 119 form a space extending along one linear line that is in parallel to the radial direction of the power transmission shaft 10. It is noted that the number of the communication holes 120 in the cam biasing mechanism accommodation unit of the First Embodiment may be three or more.

In the example shown in FIG. 1, the sliders 41, 42, and 43 are slide gears 41, 42, and 43. Each of the slide gears 41, 42, and 43 has a gear tooth surface which is meshed with a shift gear that is provided on the input shaft 11 or the output shaft 12 which is different from the shaft on which that slide gear is provided. One gear tooth surface 45 is meshed with one shift gear. Each of the slide gears 41, 42, and 43 has at least one gear tooth surface 45 meshed with at least one shift gear. Each gear tooth surface is always meshed with one of the shift gears 31 to 36. In the examples shown in FIG. 1, the slide gear 41 has one gear tooth surface meshed with the shift gear 35, the slide gear 42 has one gear tooth surface meshed with the shift gear 36, and the slide gear 43 has two gear tooth surfaces meshed with the two shift gears 33 and 34, respectively.

In the example shown in FIG. 1, on the input shaft 11, a meshing gear 21, a fifth speed gear 35, a slide gear 43, a sixth speed gear 36, and a meshing gear 22 are provided in this order in the axial direction. Among these members, the meshing gear 21 is closest to an end portion of the input shaft 11, with which the driving source 5 is connected. On the input shaft 12, a first speed gear 31, a slide gear 41, a third speed gear 33, a fourth speed gear 34, a slide gear 42, and a second speed gear 32 are provided in this order in the axial direction. Among these members, the first speed gear 31 is closest to an end portion of the input shaft 11, with which the driving source 5 is connected. Each of the meshing gear 21 and the meshing gear 22 is arranged to be rotatable together with the input shaft 11 and immovable in the axial direction.

While in the example shown in FIG. 1 the sliders 41, 42, and 43 are slide gears having gear tooth surfaces, the invention is not limited to this arrangement. For example, as shown in Patent Literature 1, a transmission may be arranged such that a slider and a gear meshed with a shift gear at a gear tooth surface are independently provided.

In the transmission 1 of the First Embodiment, it is possible to perform seamless shift up and to increase the elastic force of the spring 81 of the cam biasing mechanism 80 when the spring 81 is in contact with the cam surface 71 and presses the slider 41, 42 in the axial direction, while maintaining both the strength and rigidity of the input shaft 11 and the output shaft 12.

### [Second Embodiment]

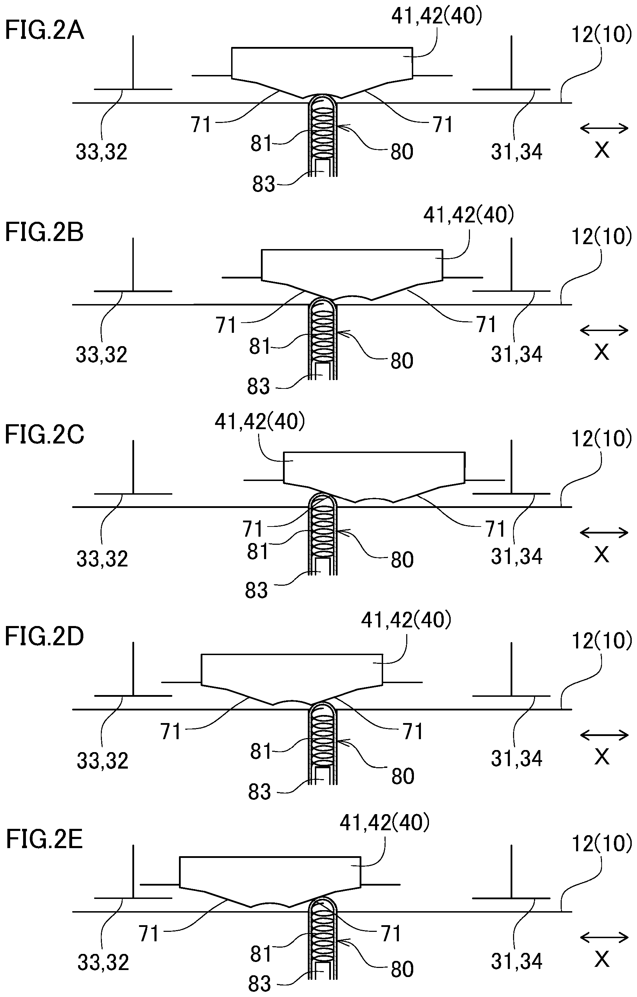

The following will describe a transmission 1 of the Second Embodiment of the present invention with reference to FIGs. 2A to 2E. FIGs. 2A to 2E are used for explaining the movement of a slider 41, 42 in the axial direction in the transmission 1 of the Second Embodiment. The transmission 1 shown in FIGs. 2A to 2E is a specific example of the transmission 1 shown in FIG. 1.

As shown in FIGs. 2A to 2E, a slider 40 (41, 42) has two cam surfaces 71 that are spaced apart from each other in the axial direction. Each cam surface 71 is tilted relative to the axial direction so that the outermost end in the axial direction of the slider 41, 42 is farthest in the radial direction from the output shaft 12.

The slider 41 is at a standby position shown in FIG. 2A, when the slider 41 is connected to neither the first speed gear 31 nor the third speed gear 33. The slider 42 is at a standby position shown in FIG. 2A, when the slider 42 is connected to neither the second speed gear 32 nor the fourth speed gear 34. When the slider 41, 42 is at the standby position, the cam biasing mechanism 80 is positioned between the two cam surfaces 71 in the axial direction.

In the Second Embodiment, by the shift fork 131, 132, it is possible to move the slider 41, 42 from the standby position shown in FIG. 2A to the position shown in FIG. 2B or the position shown in FIG. 2D in the axial direction. As the slider 41, 42 is moved by the shift fork 131, 132 from the position shown in FIG. 2A to the position shown in FIG. 2B or FIG. 2D, the cam biasing mechanism 80 makes contact with the cam surface 71. As a result, the elastic force exerted in the radial direction of the output shaft 12 by the cam biasing mechanism 80 is converted by the cam surface 71 to a force acting on the slider 41, 42 in the direction away from the standby position in the axial direction. On this account, the slider 41, 42 having been moved to the position shown in FIG. 2B by the shift fork 131, 132 is movable rightward in the axial direction to the position shown in FIG. 2C by the above-described force acting away from the standby position, without needing the help of the shift fork 131, 132. The slider 41, 42 having been moved to the position shown in FIG. 2D by the shift fork 131, 132 is movable leftward in the axial direction to the position shown in FIG. 2(e) by the above-described force acting away from the standby position, without needing the help of the shift fork 131, 132.

In the transmission capable of performing seamless shift up, for example, as described in below-described Ninth Embodiment, when a torque transmitted to the transmission is changed from a drive torque to a coast torque, the slider 41, 42 may be required to be moved from a drive meshed position to a coast meshed position that is far from the standby position as compared to the drive meshed position. In the transmission 1 of the Second Embodiment, this requirement is satisfied by moving the slider 41, 42 from the standby position to the drive meshed position by the shift fork 131, 132 and then moving the slider from the drive meshed position to the coast meshed position by the cam biasing mechanism 80. It is noted that the state shown in FIG. 2C and FIG. 2(e) is a state in which the slider 41, 42 is at the coast meshed position. The state shown in FIG. 2B and FIG. 2D may be a state in which the slider 41, 42 is at the drive meshed position. Alternatively, the state shown in FIG. 2B and FIG. 2D may be a state in which the slider 41, 42 is at a position between the drive meshed position and the coast meshed position, when shift down is being performed.

### [Third Embodiment]

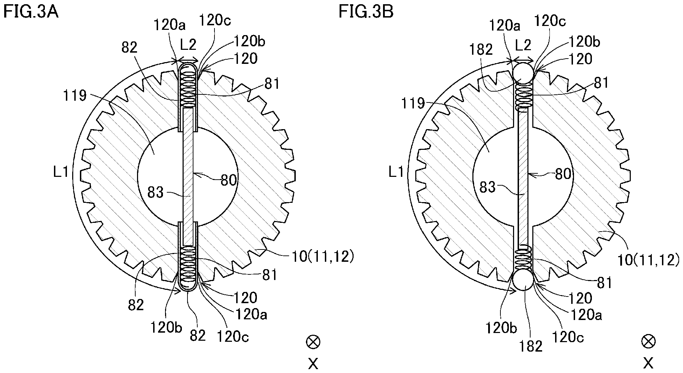

The following will describe a transmission 1 of the Third Embodiment of the present invention with reference to FIG. 3A. FIG. 3A shows a cam biasing mechanism 80 of the transmission 1 of the Third Embodiment. The transmission 1 of the Third Embodiment has the same features as the transmission 1 of the First Embodiment.

In the Third Embodiment, the cam biasing mechanism 80 includes contact members 82, in addition to springs 81 and one support member 83. The contact member 82 makes contact with a cam surface 71. The contact member 82 is at least partially provided in the communication hole 120. The contact member 82 accommodates at least part of the spring 81. While the contact member 82 accommodates the entirety of the spring 81 in FIG. 3A, the contact member 82 may only partially accommodate the spring 81. The contact member 82 is in contact with the leading end in an elongation-contraction direction of the spring 81. The contact member 82 may be joined with the spring 81. Depending on the shape of the contact member 82, the contact member 82 may be in contact with the spring 81 without being joined with the spring 81. In accordance with the state of elongation and contraction of the spring 81, the position of the contact member 82 changes in the radial direction of the power transmission shaft 10.

In this regard, when the spring 81 maximally contracts in the transmission 1, the contact member 82 may be partially positioned in the lubricating oil passage 119. With this arrangement, the contact member 82 is long as compared to a case where the contact member 82 is not positioned in the lubricating oil passage 119 at all when the spring 81 maximally contracts in the transmission 1 and the length of the communication hole 120 is identical with the length in the arrangement. It is therefore possible to further elongate the spring 81 even when the entirety of the spring 81 is accommodated in the contact member 82. When the spring 81 maximally contracts in the transmission 1, the contact member 82 may not be positioned in the lubricating oil passage 119 at all.

### [Fourth Embodiment]

The following will describe a transmission 1 of the Fourth Embodiment of the present invention with reference to FIG. 3B. FIG. 3B shows an example of a cam biasing mechanism 80 of the transmission 1 of the Fourth Embodiment. The transmission 1 of the Fourth Embodiment is structurally identical with the transmission 1 of the First Embodiment.

In the Fourth Embodiment, the cam biasing mechanism 80 includes balls 182, in addition to springs 81 and one support member 83. The ball 182 makes contact with a cam surface 71. The ball 182 is in contact with the leading end in an elongation-contraction direction of the spring 81.

### [Fifth Embodiment]

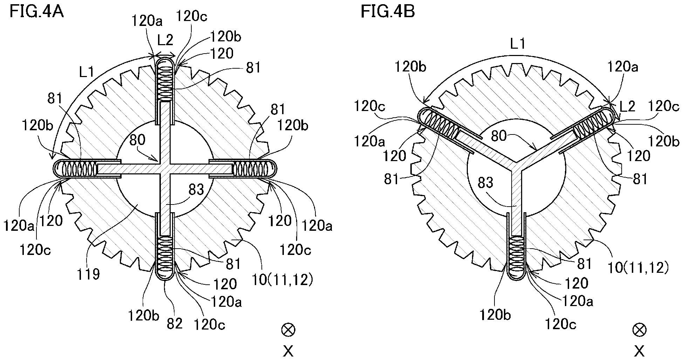

The following will describe a transmission 1 of the Fifth Embodiment of the present invention with reference to FIG. 4A. FIG. 4A shows a cam biasing mechanism 80 of the transmission 1 of the Fourth Embodiment. The transmission 1 of the Fifth Embodiment has the same features as the transmission 1 of the First Embodiment. The transmission 1 of the Fifth Embodiment may have the same features as the transmission 1 of any one of the Second to Fourth Embodiments.

In the transmission 1 of the Fifth Embodiment, the power transmission shaft 10 (the input shaft 11 or the output shaft 12) has four communication holes 120 for one cam biasing mechanism 80. To put it differently, in the transmission 1 of the Fifth Embodiment, the cam biasing mechanism accommodation unit is formed of four communication holes 120. The four communication holes 120 are deviated from each other by about 90 degrees in the circumferential direction of the power transmission shaft 10.

Accordingly, in the Fifth Embodiment, the cam biasing mechanism 80 includes four springs 81 and one support member 83. The support member 83 is cross-shaped. Four leading end portions of the cross-shaped support member 83 are in contact with the respective springs 81. The cross-shaped support member 83 may be dividable into plural components.

### [Sixth Embodiment]

The following will describe a transmission 1 of the Sixth Embodiment of the present invention with reference to FIG. 4B. FIG. 4B shows a cam biasing mechanism 80 of the transmission 1 of the Sixth Embodiment. The transmission 1 of the Sixth Embodiment has the same features as that of the First Embodiment. The transmission 1 of the Sixth Embodiment may have the same features as that of any one of the Second to Fourth Embodiments.

In the transmission 1 of the Sixth Embodiment, the power transmission shaft 10 (the input shaft 11 or the output shaft 12) has three communication holes 120 for one cam biasing mechanism 80. To put it differently, in the transmission 1 of the Sixth Embodiment, the cam biasing mechanism accommodation unit is formed of three communication holes 120. The three communication holes 120 are deviated from each other by about 120 degrees in the circumferential direction of the power transmission shaft 10.

Accordingly, in the Sixth Embodiment, the cam biasing mechanism 80 includes three springs 81 and one support member 83. The support member 83 is Y-shaped. Three leading end portions of the Y-shaped support member 83 are in contact with the respective springs 81. The Y-shaped support member 83 may be dividable into plural components.

### [Seventh Embodiment]

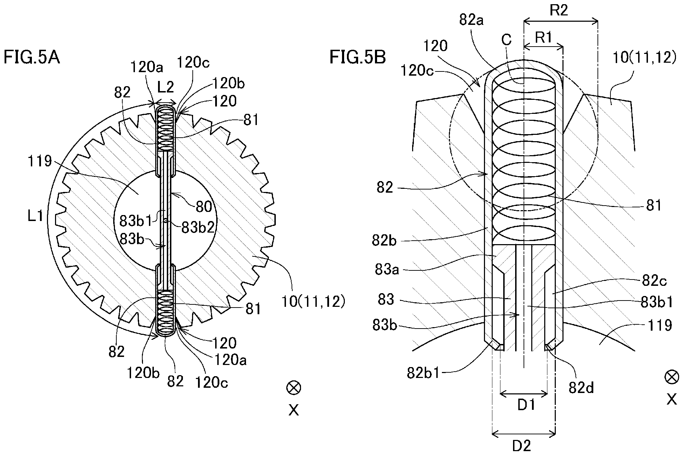

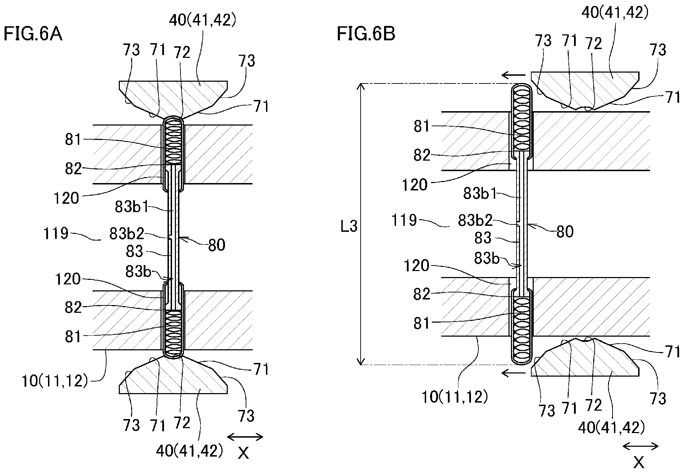

The following will describe a transmission 1 of the Seventh Embodiment of the present invention with reference to FIGs. 5A and 5B and FIGs. 6A and 6B. FIG. 5A shows an example of a cam biasing mechanism 80 of the transmission 1 of the Seventh Embodiment. FIG. 5B is an enlarged view of part of FIG. 5A. FIG. 6A is a cross section taken along the axial direction of part of the transmission 1 of the Seventh Embodiment. FIG. 6B is a drawing for illustrating how a cam biasing mechanism 80 and a slider 40 are attached to a power transmission shaft 10. The transmission 1 of the Seventh Embodiment has the same features as the transmissions 1 of the First Embodiment and the Third Embodiment. The transmission 1 of the Seventh Embodiment may have the same features as the transmission 1 of the Second, Fourth, or Sixth Embodiment.

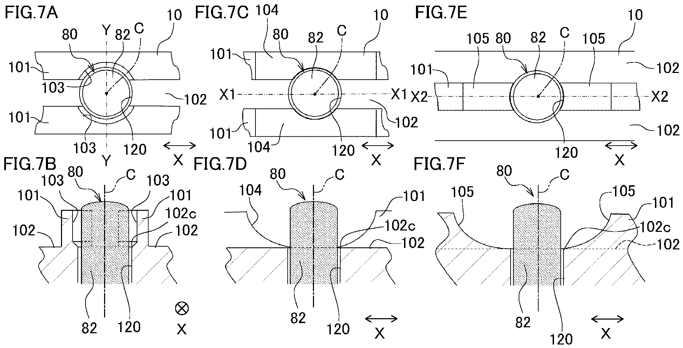

In the Seventh Embodiment, a communication hole 120 is circular in shape in a cross section orthogonal to a central axial line C passing through the center of the communication hole 120, in the same manner as in later-described Eighth Embodiment, for example (see FIGs. 7A, 7C, and 7E). The cam biasing mechanism 80 includes two springs 81, two contact members 82, and one support member 83. The contact member 82 has a protruding surface section 82a and a cylindrical section 82b. The protruding surface section 82a is a portion making contact with a cam surface 71 and is formed as a part of a spherical surface. The curvature radius R2 of the protruding surface section 82a is longer than the radius R1 of the communication hole 120. The cylindrical section 82b is a cylindrical portion that is substantially identical with the communication hole 120 in radius, and is formed to be integrated with the protruding surface section 82a. The contact member 82 has an accommodation space 82c that is formed along the length of the communication hole 120 by the protruding surface section 82a and the cylindrical section 82b. The accommodation space 82c accommodates the spring 81. The cylindrical section 82b has a bended portion 82b1 that is bended inward in the radial direction of the cylindrical section 82b and is provided at an end portion on the opposite side of the protruding surface section 82a. With this arrangement, the diameter D1 of an open end 82d that is an end of the contact member 82 on the opposite side of the protruding surface section 82a is shorter than the diameter of a part of the accommodation space 82c, which is formed by the portion of the cylindrical section 82b other than the folder part 82b1.

The support member 83 is shaped as a rod that is circular in shape in a cross section taken in a direction orthogonal to the central axial line C of the communication hole 120 and extends along a single linear line. Two end portions of the rod-shaped support member 83 are in contact with springs 81, respectively. Each of the two end portions of the support member 83 which are in contact with the springs 81 has a large diameter portion 83a. The support member 83 has a portion which is shorter in diameter than the large diameter portion 83a and is positioned to be closer to the power transmission shaft 10 than the large diameter portion 83a is to the power transmission shaft 10. This portion shorter in diameter than the large diameter portion 83a is connected to the large diameter portion 83a. In the example shown in FIGs. 5A and 5B, the large diameter portion 83a is longer in diameter than the remaining portion of the support member 83. The diameter D2 of the large diameter portion 83a is substantially identical with a portion of the accommodation space 82c, which is formed of a portion of the cylindrical section 82b different from the bended portion 82b1, and is longer than the diameter D1 of the open end 82d of the contact member 82. The large diameter portion 83a is provided at a part of the accommodation space 82c, which is formed of a portion of the cylindrical section 82b different from the bended portion 82b1. With this arrangement, the large diameter portion 83a provided in the accommodation space 82c does not pass through the open end 82d and go out from the accommodation space 82c. To put it differently, the large diameter portion 83a does not come out from the contact member 82, and the contact member 82 is connected to the support member 83.

The slider 40 of the transmission 1 of the Seventh Embodiment has four cam surfaces 71, two checking grooves 72, and four guide surfaces 73. Each checking groove 72 is formed between two cam surfaces 71 that are aligned in the axial direction. In the example shown in FIG. 6A, the checking groove 72 has a spherical surface. While in the example shown in FIG. 6A the slider 40 has two checking grooves 72 corresponding to two contact members 82, the number of checking grooves 72 formed to be aligned in the circumferential direction is not limited to two, and may be three or more. The checking grooves 72 may be a single groove which extends in the circumferential direction of the slider 40. In this case, the checking groove 72 may be curved in shape such as arc-shaped, may be V-shaped, or may be tapered in shape with a flat portion at a central portion, when viewed in a direction orthogonal to the circumferential direction.

The slider 40 makes contact with a contact member 82 of the cam biasing mechanism 80. The contact member 82 of the cam biasing mechanism 80 makes contact with the four cam surfaces 71 and the two checking grooves 72. The contact member 82 of the cam biasing mechanism 80 simultaneously makes contact with two cam surfaces 71 aligned in the circumferential direction among the four cam surfaces 71. Each cam surface 71 is a tilted surface that is tilted relative to the axial direction, i.e., the cam surface 71 is angled away from the checking groove 72 in the axial direction toward the outer side in the radial direction of the power transmission shaft 10. When the slider 40 moves in the axial direction, the contact member 82 of the cam biasing mechanism 80 makes contact with the cam surface 71. When the contact member 82 of the cam biasing mechanism 80 makes contact with the cam surface 71, the elastic force of the spring 81 acts as a force of pressing the slider 40 in the axial direction in which the checking groove 72 moves away from the cam biasing mechanism 80. The checking groove 72 is formed to allow the contact member 82 of the cam biasing mechanism 80 to be fitted therewith. When the transmission 1 is in neither the second speed stage nor the fourth speed stage and the slider 42 is at the standby position, the contact member 82 of the cam biasing mechanism 80 is fitted with the checking groove 72 of the slider 40. The elastic force of the spring 81 acts as resistance to the movement in the axial direction of the slider 40 in a state in which the cam biasing mechanism 80 is fitted with the checking groove 72. When the cam biasing mechanism 80 enters the checking groove 72, the elastic force of the spring 81 acts as a force moving the slider 40 in the axial direction until the cam biasing mechanism 80 is fitted with the checking groove 72.

The four guide surfaces 73 correspond to the four cam surfaces 71, respectively, and each guide surface 73 is connected to the outer end in the axial direction of the corresponding cam surface 71. Each guide surface 73 is a tilted surface that is tilted relative to the axial direction, i.e., the guide surface 73 is angled away from the checking groove 72 in the axial direction toward the outer side in the radial direction of the power transmission shaft 10. The tilt angle of the guide surface 73 relative to the axial direction may be larger than the tilt angle of the cam surface 71 in the axial direction, or may be smaller than the tilt angle of the cam surface 71 relative to the axial direction. The cam biasing mechanism 80 of the Seventh Embodiment may be arranged such that, for example, a spring 81 and portions of the support member 83 including the large diameter portion 83a are accommodated in the accommodation space 82c of the contact member 82 in which a bended portion 82b1 is not formed, and then the bended portion 82b1 is formed by bending an end portion of the cylindrical section 82b, which is on the opposite side of the protruding surface section 82a.

In the Seventh Embodiment, when the transmission 1 is manufactured, for example, in the manner described above. That is to say, as shown in FIG. 6B, the cam biasing mechanism 80 having been formed is inserted, through one of the two communication holes 120, into the above-described space that is formed by the two communication holes 120 and part of the lubricating oil passage 119 and extends along one linear line that is in parallel to the radial direction of the power transmission shaft 10, and the cam biasing mechanism 80 is then attached to the power transmission shaft 10 as the slider 40 is moved along the axial direction. In a state before the attachment of the slider 40, the cam biasing mechanism 80 is arranged so that the large diameter portion 83a of the support member 83 is in contact with the bended portion 82b1 of the cylindrical section 82b on account of the elastic force of the spring 81, and the length in the radial direction of the power transmission shaft 10 is L3 even if the springs 81 are different in length. When the slider 40 is moved along the axial direction and attached to the power transmission shaft 10 as described above, the contact member 82 makes contact with the guide surface 73, the cam surface 71, and the checking groove 72 in this order, with the result that the spring 81 is contracted and the contact member 82 moves inward in the radial direction of the power transmission shaft 10. Subsequently, as shown in FIG. 6A, the contact member 82 is fitted with the checking groove 72. With this, the attachment of the slider 40 to the power transmission shaft 10 is completed.

In this way, in the Seventh Embodiment, the cam biasing mechanism 80 and the slider 40 can be easily attached to the power transmission shaft 10. Furthermore, before the slider 40 is attached, the length of the cam biasing mechanism 80 in the radial direction of the power transmission shaft 10 is L3 irrespective of the lengths of the springs 81. On this account, the tilt angle of the guide surface 73 relative to the axial direction can be easily set.

In this connection, while FIG. 6B shows a case where the slider 40 is attached to the power transmission shaft 10 from the right side in FIG. 6B, the slider 40 may be attached to the power transmission shaft 10 from the left side in FIG. 6B.

The support member 83 has an oil hole 83b. The oil hole 83b has a first hole portion 83b1 and a second hole portion 83b2. The first hole portion 83c is formed along the central axial line C of the communication hole 120. The both ends in the longitudinal direction of the first hole portion 83b1 are open and face the springs 81. The second hole portion 83b2 connects a central portion in the longitudinal direction of the first hole portion 83b1 with the lubricating oil passage 119. With this arrangement, at the oil hole 83b, the lubricating oil flows from the lubricating oil passage 119 into the second hole portion 83b2, and the lubricating oil having flown into the second hole portion 83b2 flows in the first hole portion 83b1 toward the springs 81. When pressurized lubricating oil is supplied to the lubricating oil passage 119, the load on the cam surface 71 from the cam biasing mechanism 80 is not only the elastic force of the spring 81 but also the pressure of the lubricating oil. In this connection, because the support member 83 has the oil hole 83b, the lubricating oil flows equally toward the two springs 81, with the result that the two cam surfaces 71 are equally pressurized by the lubricating oil.

### [Modifications of the Seventh Embodiment]

Modifications of the Seventh Embodiment of the present invention will be described below.

In the Seventh Embodiment, the number of the contact members 82 in the cam biasing mechanism 80 may be three or more.

In the Seventh Embodiment, the curvature radius R2 of the protruding surface section 82a may be equal to or shorter than the radius R1 of the communication hole 120.

In the Seventh Embodiment, the cylindrical section 82b may not have the bended portion 82b1, and the portion of the accommodation space 82c formed of the cylindrical section 82b may be substantially constant in diameter. In this case, the support member 83 may not have the large diameter portion 83a. In the Seventh Embodiment, the contact member 82 in which at least part of the spring 81 is accommodated may not have the protruding surface section 82a and the cylindrical section 82b.

In the Seventh Embodiment, the support member 83 may not have the oil hole 83b.

In the Seventh Embodiment, the slider 40 may not have the checking groove 72.

In the Seventh Embodiment, when the slider 40 is attached to the power transmission shaft 10 from the right side in FIG. 6B, the two guide surfaces 73 on the right side in FIG. 6B among the four guide surfaces 73 of the slider 40 may not be provided.

In the Seventh Embodiment, when the slider 40 is attached to the power transmission shaft 10 from the left side in FIG. 6B, the two guide surfaces 73 on the left side in FIG. 6B among the four guide surfaces 73 of the slider 40 may not be provided.

In the Seventh Embodiment, the slider 40 may not have the guide surface 73.

These modifications may be implemented in combination.

### [Eighth Embodiment]

The following will describe a transmission 1 of the Eighth Embodiment of the present invention with reference to FIG. 7A to FIG. 7F. The transmission 1 of the Eighth Embodiment has the same features as the transmissions 1 of the First Embodiment and Third Embodiment. The transmission of the Eighth Embodiment may have the same features as the transmission 1 of the Second and Fourth to Seventh Embodiments.

In the transmission 1 of the Eighth Embodiment, a spline on which recesses 102 and protrusions 101 are alternately provided in the circumferential direction is formed on the outer circumferential surface of at least one power transmission shaft 10 (the input shaft 11 or the output shaft 12). The slider 40 is fitted with the spline to be movable in the axial direction. The communication hole 120 is circular in shape in a cross section orthogonal to the central axial line C passing through the center of the communication hole 120. Furthermore, the communication hole 120 is formed so that the center of the communication hole 120 passes through a recess 102 or a protrusion 101. The communication hole 120 may be formed so that the center of the communication hole 120 passes through the center in the circumferential direction of a recess 102 or a protrusion 101.

FIG. 7A shows an example of part of the outer circumferential surface of the power transmission shaft 10 when the center of the communication hole 120 passes through a recess 102. FIG. 7B is a cross section taken along a Y-Y line in FIG. 7A. In the example shown in FIG. 7A and FIG. 7B, the spline has cutouts 103 with which the two protrusions 101 neighboring the recess 102 passing through the center of the communication hole 120 form a counterbored shape. The cutouts 103 are formed at the two protrusions 101, respectively. The two cutouts 103 are formed along parts of the outer circumferential surface of the contact member 82. At least part of the two cutouts 103 is formed as part of the inner circumferential surface of a virtual cylindrical body that is centered on the central axial line C passing through the center of the communication hole 120.

FIG. 7C shows another example of part of the outer circumferential surface of the power transmission shaft 10 when the center of the communication hole 120 passes through a recess 102. FIG. 7D is a cross section taken along an X1-X2 line in FIG. 7C. In the example shown in FIG. 7C and FIG. 7D, the spline has cutouts 104 with which the two protrusions 101 neighboring the recess 102 passing through the center of the communication hole 120 form a countersunk shape in the axial direction. The cutouts 104 are formed at the two protrusions 101, respectively. Each of the two cutouts 104 is narrowed (tapered) inward in the radial direction of the power transmission shaft 10 (the input shaft 11 or the output shaft 12) in a cross section taken along the axial direction. Each cutout 104 may have a flat surface and/or a curved surface.

FIG. 7E shows an example of part of the outer circumferential surface of the power transmission shaft 10 when the center of the communication hole 120 passes through the protrusion 101. FIG. 7F is a cross section taken along an X2-X2 line in FIG. 7E. In the example shown in FIG. 7E and FIG. 7F, the spline has cutouts 105 with which the protrusion 101 passing through the center of the communication hole 120 forms a countersunk shape in the axial direction. One cutout 105 is formed at each of the ends in the axial direction of the communication hole 120. Each of the two cutouts 105 is narrowed (tapered) inward in the radial direction of the power transmission shaft 10 (the input shaft 11 or the output shaft 12) in a cross section taken along the axial direction. Each cutout 105 may have a flat surface and/or a curved surface.

The contact member 82 of the cam biasing mechanism 80 protrudes more than the protrusion 101 and makes contact with the cam surface 71. In this connection, FIGs. 7(a) to 7(f) show mere examples, and the lengths in the circumferential direction of the protrusion 101 and the recess 102, the diameter of the communication hole 120, the diameter of the contact member 82, and the curvature radius of the contact member 82 are not limited to those in the examples shown in FIGs. 7(a) to 7(f).

For example, while the example in FIG. 7A and FIG. 7B shows a case where the diameter of the communication hole 120 is longer than the width (length in the circumferential direction) of the recess 102 passing through the center of the communication hole 120, the diameter of the communication hole 120 may be equal to or shorter than the width of the recess 102 passing through the center of the communication hole 120 in the example shown in FIG. 7A and FIG. 7B.

Furthermore, while the example in FIG. 7C and FIG. 7D shows a case where the diameter of the communication hole 120 is longer than the width (length in the circumferential direction) of the recess 102 passing through the center of the communication hole 120, the diameter of the communication hole 120 may be equal to or shorter than the width of the recess 102 passing through the center of the communication hole 120 in the example shown in FIG. 7C and FIG. 7D.

Furthermore, while the example in FIG. 7E and FIG. 7F shows a case where the diameter of the communication hole 120 is longer than the width (length in the circumferential direction) of the protrusion 101 passing through the center of the communication hole 120, the diameter of the communication hole 120 may be equal to or shorter than the width of the protrusion 101 passing through the center of the communication hole 120 in the example shown in FIG. 7E and FIG. 7F.

### [Ninth Embodiment]

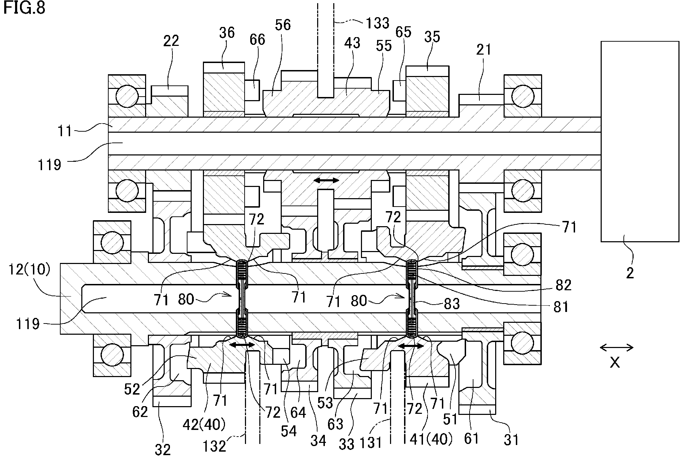

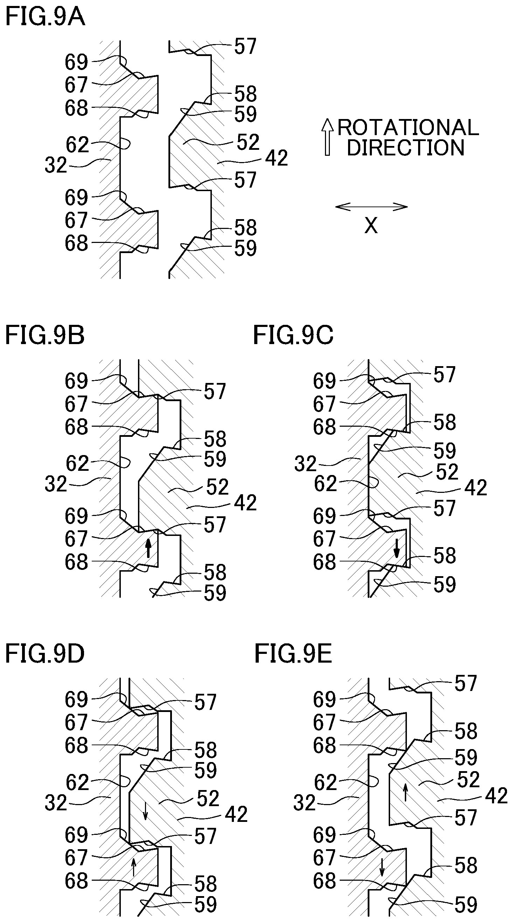

The following will describe a transmission 1 of the Ninth Embodiment of the present invention with reference to FIG. 8 and FIG. 9. The transmission 1 of the Ninth Embodiment is a specific example of the transmission 1 of the First Embodiment shown in FIG. 1. It is, however, noted that the cam biasing mechanism 80 of the Seventh Embodiment is employed as the cam biasing mechanism 80 of the present embodiment.

The transmission 1 of the Ninth Embodiment is mounted on, for example, a vehicle (not illustrated) such as a motorcycle. The vehicle includes a driving source 5 (see FIG. 1) such as an engine, the transmission 1, a clutch 2, and a controller (not illustrated). The driving force generated by the driving source 5 is transmitted to a wheel that is a driving target 4 (see FIG. 1), through the clutch 2 and the transmission 1. The controller controls the driving source 5, the transmission 1, and the clutch 2.

The transmission 1 is configured to be able to transmit power of the input shaft 11 to the output shaft 12. The ratio of the rotational speed of the input shaft 11 to the rotation speed of the output shaft 12 is termed a transmission ratio. The transmission 1 has plural speed stages (gear positions) that are different in transmission ratio. The speed stage of the transmission 1 is changed by the controller. The vehicle may include a shift operator (not illustrated) that is operated by the driver to change the speed stage of the transmission 1. The controller changes the speed stage of the transmission 1 in accordance with an operation of the shift operator. The controller may be arranged to be able to automatically change the speed stage of the transmission 1 in accordance with, for example, the vehicle speed, when the shift operator is not operated. The vehicle may not include a shift operator that is operated by the driver to change the speed stage of the transmission 1.

The input shaft 11 is connected to the driving source 5 through the clutch 2. When, for example, the driving source 5 is an engine, the input shaft 11 is connected to the crankshaft of the engine. The clutch 2 is a friction clutch, for example, but is not limited to this. However, the clutch 2 is not a dual clutch. In other words, the transmission 1 is not a dual clutch transmission. The transmission 1 is an AMT (Automated Manual Transmission). In other words, the controller is arranged to be able to automatically change the power transmission ratio of the clutch 2 without requiring an operation by the driver. The controller may control at least one of the clutch 2 or the engine (driving source 5) when changing the speed stage of the transmission 1.

As shown in FIG. 8, the transmission 1 includes three slide gears 41, 42, and 43. The following will describe an arrangement in which the shift gears 31 to 36 are connected to the slide gears 41, 42, and 43.

The slide gear 41 has dogs 51 that are provided at an end portion opposing the first speed gear 31 in the axial direction. The first speed gear 31 has dogs 61 that are connectable with the dogs 51 of the slide gear 41 by meshing therewith. The slide gear 41 has dogs 53 that are provided at an end portion opposing the third speed gear 33 in the axial direction. The third speed gear 33 has dogs 63 that are connectable with the dogs 53 of the slide gear 41 by meshing therewith. The slide gear 42 has dogs 52 that are provided at an end portion opposing the second speed gear 32 in the axial direction. The second speed gear 32 has dogs 62 that are connectable with the dogs 52 of the slide gear 42 by meshing therewith. The slide gear 42 has dogs 54 that are provided at an end portion opposing the fourth speed gear 34 in the axial direction. The fourth speed gear 34 has dogs 64 that are connectable with the dogs 54 of the slide gear 42 by meshing therewith. The slide gear 43 has dogs 55 that are provided at an end portion opposing the fifth speed gear 35 in the axial direction. The fifth speed gear 35 has dogs 65 that are connectable with the dogs 55 of the slide gear 43 by meshing therewith. The slide gear 43 has dogs 56 that are provided at an end portion opposing the sixth speed gear 36 in the axial direction. The sixth speed gear 36 has dogs 66 that are connectable with the dogs 56 of the slide gear 43 by meshing therewith.

As the slide gears 41, 42, and 43 are moved in the axial direction from the standby position shown in FIG. 8, each of the slide gears 41, 42, and 43 is meshed with one of the shift gears 31 to 36 adjacent to the each slide gear in the axial direction, by means of the dogs. When one of the shift gears 31 to 36 is meshed with a slide gear adjacent to the one shift gear in the axial direction by means of the dogs, power is transmitted from the input shaft 11 to the output shaft 12 through that shift gear and that slide gear. For example, when the first speed gear 31 is meshed with the slide gear 41, the power from the input shaft 11 is transmitted to the gear 21, the first speed gear 31, the slide gear 41, and then the output shaft 12 in order. The speed stage of the transmission 1 in this case is the first speed stage. For example, when the third speed gear 33 is meshed with the slide gear 41, the power from the input shaft 11 is transmitted to the slide gear 43, the third speed gear 33, the slide gear 41, and then the output shaft 12 in order. The speed stage of the transmission 1 in this case is the third speed stage. For example, when the fifth speed gear 35 is meshed with the slide gear 43, the power from the input shaft 11 is transmitted to the slide gear 43, the fifth speed gear 35, the slide gear 41, and then the output shaft 12 in order. The speed stage of the transmission 1 in this case is the fifth speed stage. When none of the shift gears is meshed with a slide gear adjacent to each shift gear in the axial direction, the transmission 1 is in a neutral state. As the movement of the slide gears 41, 42, and 43 in the axial direction is controlled, the speed stage of the transmission 1 is controlled. In other words, the slide gears 41, 42, and 43 are driven in the axial direction in order to change the speed stage.

The dogs 51 are aligned in the circumferential direction. The dogs 52 to 56 and 61 to 66 are also aligned in the circumferential direction. The dogs 51 to 56 of the slide gears 41, 42, and 43 are dog teeth. In other words, the dogs 51 to 56 are formed to protrude in the axial direction. The dogs 61 to 64 of the shift gears 31 to 34 are dog holes. The dogs 61 to 64 are concave in shape. In other words, the dogs 61 to 64 are dog holes that do not penetrate the shift gears 31 to 34 in the axial direction. The dogs 61 to 64 may be dog holes penetrating the shift gears 31 to 36 in the axial direction. The dogs 61 to 64 may be dog teeth. In this case, the dogs 51 to 54 may be dog teeth or dog holes. The dogs 65 and 66 of the shift gears 35 and 36 are dog teeth. The dogs 65 and 66 may be dog holes.

The following will describe common characteristics of the dogs (dog holes) 61 to 64 of the shift gears 31 to 34 and common characteristics of the dogs (dog teeth) 51 to 54 of the slide gears 41 and 42, by taking the dog 62 of the second speed gear 32 and the dog 52 of the slide gear 42 as an example. FIG. 9A to FIG. 9E are developed sectional views of the second speed gear 32 and the slide gear 42. The up-down direction in each of FIG. 9A to FIG. 9E indicates the circumferential direction about the rotational central axis of the output shaft 12. The rotational direction of each of the shift gear 32 and the slide gear 42 is an upward direction in FIG. 9A to FIG. 9E. FIG. 9A shows a state in which the transmission 1 is at a speed stage different from the second speed stage or at the neutral position. The arrows in FIG. 9B and FIG. 9C show the direction of the torque generated in the shift gear 32. The arrows in FIG. 9D and FIG. 9E show the rotational direction of the slide gear 42 relative to the shift gear 32 and the rotational direction of the shift gear 32 relative to the slide gear 42.

The dog (dog tooth) 52 has a drive meshing surface 57, a coast meshing surface 58, and a release guide surface 59. In the axial direction, the drive meshing surface 57 is close to the tip of the teeth as compared to the coast meshing surface 58. The drive meshing surface 57 is tilted in the circumferential direction relative to the axial direction. The drive meshing surface 57 is tilted so that one end of the surface close to the bottom of the teeth is on the downstream in the rotational direction of the shift gear 32 and the slide gear 42 as compared to the other end of the surface far from the bottom of the teeth. The drive meshing surface 57 may be formed to extend along the axial direction. The coast meshing surface 58 is tilted in the circumferential direction relative to the axial direction. The coast meshing surface 58 is tilted so that one end of the surface close to the tip of the teeth is on the downstream in the rotational direction of the shift gear 32 and the slide gear 42 as compared to the other end of the surface far from the tip of the teeth. The coast meshing surface 58 may be formed to extend along the axial direction. The release guide surface 59 is aligned with the drive meshing surface 57 in the circumferential direction. The release guide surface 59 is tilted in the axial direction relative to the circumferential direction. The release guide surface 59 may be spiral in shape relative to the rotational central axis of the output shaft 12, or may extend along the radial direction.

The dog (dog hole) 62 has a drive meshing surface 67, a coast meshing surface 68, and a movement guiding surface 69. The tilt angle and the tilting direction of the drive meshing surface 67 relative to the axial direction are identical with those of the drive meshing surface 57 of the dog 52. The tilt angle and the tilting direction of the coast meshing surface 68 relative to the axial direction are identical with those of the coast meshing surface 58 of the dog 52. The movement guiding surface 69 is tilted in the axial direction relative to the circumferential direction. The movement guiding surface 69 may be spiral in shape relative to the rotational central axis of the output shaft 12, or may extend along the radial direction.

FIG. 9B shows a state in which the drive meshing surface 57 is in contact with the drive meshing surface 67 and the dog 52 is meshed with the dog 62. This meshed state will be referred to as a drive meshed state. The position in the axial direction of the slide gear 42 when the slide gear 42 and the shift gear 32 are in the drive meshed state will be referred to as the drive meshed position of the slide gear 42 relative to the shift gear 32. It is noted that the term "drive meshed position" is used no matter whether the drive meshed state is established. When the transmission 1 transmits a drive torque with the second speed stage, the shift gear 32 and the slide gear 42 are in the drive meshed state. The drive torque is a torque transmitted from an engine to a wheel when the engine drives the wheel.

FIG. 9C shows a state in which the coast meshing surface 58 is in contact with the coast meshing surface 68 and the dog 52 is meshed with the dog 62. This meshed state will be referred to as a coast meshed state. In the coast meshed state, the dogs 52 and 62 are deeply meshed with each other as compared to the drive meshed state. The position in the axial direction of the slide gear 42 when the slide gear 42 and the shift gear 32 are in the coast meshed state will be referred to as the coast meshed position of the slide gear 42 relative to the shift gear 32. It is noted that the term "coast meshed position" is used no matter whether the coast meshed state is established. When the transmission 1 transmits a coast torque with the second speed stage, the shift gear 32 and the slide gear 42 are in the coast meshed state. The coast torque is a torque generated by the rotational inertia of the wheel and is exerted in the direction opposite to the drive torque. The coast torque is a torque transmitted between the engine and the wheel. The coast torque is generated when, for example, engine braking is performed.

FIG. 9D shows a state in which an edge of the dog (dog tooth) 52 is in contact with the movement guiding surface 69. As shown in FIG. 9D, when the edge of the dog 52 makes contact with the movement guiding surface 69 while the slide gear 42 rotates at a lower speed than the shift gear 32, the slide gear 42 receives a force acting away from the shift gear 32. When the transmission 1 is at the second speed stage and the torque transmitted to the transmission 1 is switched from the coast torque to the drive torque, the slide gear 42 rotates at a lower speed than the shift gear 32. Due to this, the meshing between the coast meshing surfaces 58 and 68 of the slide gear 42 and the shift gear 32 is canceled, and the dog 52 of the slide gear 42 makes contact with the movement guiding surface 69 of the shift gear 32. The dog 52 moves along the movement guiding surface 69, and the slide gear 42 and the shift gear 32 become in the drive meshed state. When the transmission 1 is at the second speed stage and the torque transmitted to the transmission 1 is switched from the drive torque to the coast torque, the slide gear 42 rotates at a speed higher than the shift gear 32. As a result, the meshing between the drive meshing surfaces 57 and 67 of the slide gear 42 and the shift gear 32 is canceled. On account of the elastic force exerted from the spring 81 of the cam biasing mechanism 80 in contact with the cam surface 71, the slide gear 42 moves in a direction in which the slide gear 42 is further deeply meshed, with the result that the slide gear 42 and the shift gear 32 become in the coast meshed state.

FIG. 9E shows a state in which the edge of the dog (dog hole) 62 is in contact with the release guide surface 59. As shown in FIG. 9E, when the edge of the dog 62 makes contact with the release guide surface 59 while the slide gear 42 rotates at a higher speed than the shift gear 32, the slide gear 42 receives a force acting away from the shift gear 32. To put it differently, when the dog 62 makes contact with the release guide surface 59, the force by which the meshing between the dogs 52 and 62 of the shift gear 32 and the slide gear 42 is canceled is generated in the slide gear 42. As detailed later, the release guide surface 59 is used when the speed is changed.

The dogs (dog holes) 61 to 64 may be different from one another in shape, as long as they share the above-described common characteristics. At least two of or all of the dogs 61 to 64 may be symmetrical in shape. The dogs (dog teeth) 51 to 54 may be different from one another in shape. At least two of or all of the dogs 51 to 54 may be symmetrical in shape. The dogs (dog teeth) 51 to 54 are different from the dogs (dog teeth) 55 and 56 in shape. The dogs (dog teeth) 55 and 56 may be different in shape, identical in shape, or symmetrical in shape. The dogs (dog teeth) 65 and 66 may be different in shape, identical in shape, or symmetrical in shape. The dogs (dog teeth) 65 and 66 may be different from the dogs (dog teeth) 55 and 56 in shape, identical in shape, or symmetrical in shape.

Each of the dogs 51 to 54 of the slide gears 41 and 42 has the release guide surface 59, whereas each of the dogs 61 to 64 of the shift gears 31 to 34 has the movement guiding surface 69. Each of the dogs of the slide gears 41 and 42 may have both the movement guiding surface and the release guide surface as in the dog of the slider of Patent Literature 1. The dog 54 of the slide gear 42 may not have the release guide surface 59. Each of the dogs 64 of the fourth speed gear 34 and the dogs 54 of the slide gear 42 may not have the movement guiding surface. The shape of each of the dogs 64 of the fourth speed gear 34 and the dogs 54 of the slide gear 42 may be identical with the shape of each of the dogs 65 and 66 of the shift gears 35 and 36 and the dogs 55 and 56 of the slide gear 43.

The transmission 1 is arranged so that, when shifting up, the transmission 1 is temporarily in a double-meshed state where the two slide gears 41 and 42 are simultaneously meshed with two of the shift gears 31 to 34 through dogs. For example, when shifting up from the first speed stage to the second speed stage, the transmission 1 is temporarily in the double-meshed state where the two slide gears 41 and 42 are simultaneously meshed with the shift gears 31 and 32 through the dogs 51, 52, 61, and 62. When the slide gear 42 is meshed with the second speed gear 32 through the dogs 52 and 62, the slide gear 41 rotates at a higher speed than the first speed gear 31. The transmission 1 is arranged so that the movement of the slide gear 41 in the axial direction toward the first speed gear 31 is restricted in this case. As a result, the release guide surface 59 of the dog 51 of the slide gear 41 makes contact with the dog 61 of the first speed gear 31 and hence the slide gear 41 moves away from the first speed gear 31 in the axial direction. Due to this, the meshing between the dog 51 of the slide gear 41 and the dog 61 of the first speed gear 31 is canceled. On this account, being different from the controller of the known transmission, the controller is not required to control the clutch 2 and the engine in order to reduce the pressing force generated in accordance with the power transmission between the dog 51 of the slide gear 41 and the dog 61 of the first speed gear 31. As such, the transmission 1 is arranged so that a force of canceling the meshing of the dogs is generated in one of the two slide gears 41 and 42, when the double-meshed state is established. The transmission 1 is therefore able to seamlessly perform shift up to the second speed stage without blocking the power transmission. Likewise, the transmission 1 is able to seamlessly perform shift up to the third speed stage and the fourth speed stage without blocking the power transmission. The transmission 1 is arranged so that the double-meshed state is not established when shifting down.

The following will describe the common characteristics of the slide gears 41 and 42 apart from the dogs, by taking the slide gear 42 as an example. The slide gears 41 and 42 may be different from one another in shape, as long as they share the below-described common characteristics. The slide gears 41 and 42 may be symmetrical in shape.

The slide gear 42 is spline-fitted with the output shaft 12. As shown in FIG. 8, in the inner circumferential surface of the slide gear 42, four cam surfaces 71 and two checking grooves 72 are formed in the same manner as in the Seventh Embodiment. The checking groove 72 may not be formed. On the slide gear 42, a guide surface 73 similar to that described in the Seventh Embodiment may or may not be formed.

The cam surface 71 is a tilted surface that is tilted relative to the axial direction, i.e., the cam surface 71 is angled away from the checking groove 72 in the axial direction toward the outer side in the radial direction of the output shaft 12. When the slide gear 42 moves in the axial direction, the contact member 82 of the cam biasing mechanism 80 makes contact with the cam surface 71. When the contact member 82 of the cam biasing mechanism 80 makes contact with the cam surface 71, the elastic force of the spring 81 acts as a force of pressing the slide gear 42 in the axial direction in which the checking groove 72 moves away from the cam biasing mechanism 80. The checking groove 72 is formed to allow the contact member 82 of the cam biasing mechanism 80 to be fitted therewith. When the transmission 1 is in neither the second speed stage nor the fourth speed stage and the slide gear 42 is at the standby position, the contact member 82 of the cam biasing mechanism 80 is fitted with the checking groove 72 of the slide gear 42. The elastic force of the spring 81 acts as resistance to the movement in the axial direction of the slide gear 42 in a state in which the cam biasing mechanism 80 is fitted with the checking groove 72. When the cam biasing mechanism 80 enters the checking groove 72, the elastic force of the spring 81 acts as a force moving the slide gear 42 in the axial direction until the cam biasing mechanism 80 is fitted with the checking groove 72.

The slide gears 41, 42, and 43 move in the axial direction as the shift forks 131, 132, and 133 move in the axial direction. The shift forks 131, 132, and 133 are included in a shift mechanism in which the slide gears 41, 42, and 43 are moved by the shift forks 131, 132, and 133. The shift mechanism includes an unillustrated shift actuator that is controlled by the controller. As the controller controls the shift actuator, the shift forks 131, 132, and 133 move in the axial direction. The structure of the shift mechanism is not particularly limited. The shift mechanism may be a mechanism including a shift drum, for example. To be more specific, for example, parts of the shift forks 131, 132, and 133 may be provided in grooves formed in the shift drum, respectively. Alternatively, for example, parts of components connected to the shift forks 131, 132, and 133 so as to move in the axial direction together with the shift forks 131, 132, and 133 may be provided in grooves formed in the shift drum. A mechanism in which the shift drum is rotated by the shift actuator is not particularly limited. The shift mechanism may not include a shift drum. The transmission 1 may be a sequential manual transmission. In other words, the transmission 1 may be arranged so that, when the speed (gear position) is changed, the speed is changeable to only a speed that is adjacent to the speed before the change in terms of the transmission ratio.

In the example shown in FIG. 1, the transmission 1 is a six-speed transmission. The transmission 1 of the Ninth Embodiment is a six-speed transmission, too. However, the transmission of the present invention is not limited to a six-speed transmission.

The transmission 1 of the Ninth Embodiment is arranged so that, at the time of shift up to the second speed stage, shift up to the third speed stage, and shift up to the fourth speed stage, a double-meshed state is temporarily established, whereas, at the time of shift up to the fifth speed stage and shift up to the sixth speed stage, the double-meshed state is not established. When the transmission of the present invention is a six-speed transmission, the speed stage after the completion of shift up with which the double-meshed state is temporarily established may not be the second speed stage, the third speed stage, or the fourth speed stage. The transmission of the present invention is arranged so that the double-meshed state is temporarily established when shifting up to at least one speed stage.

In the Ninth Embodiment, two slide gears may be provided in place of the slide gear 43. The transmission 1 may be arranged so that the double-meshed state is temporarily established when shifting up to the fifth speed stage or shifting up to the sixth speed stage. To be more specific, for example, among these slide gears, plural cam surfaces 71 and a checking groove 72 may be provided in the slide gear for the fifth speed stage. In this case, in the input shaft 11, plural communication holes 120 are formed and a cam biasing mechanism 80 is provided. The number of the communication holes 120 formed in the input shaft 11 may be identical with the number of cam surfaces 71 in the slide gear for the fifth speed stage. These two slide gears may have dogs that are provided at end portions opposing the shift gears 35 and 36 in the axial direction and have a common feature as the dogs 51 to 54. The dogs 65 and 66 of the shift gears 35 and 36 may have a common feature as the dogs 61 to 64 of the shift gears 31 to 34.

### [Reference Signs List]

1: transmission, 2: clutch, 4: driving target, 5: driving source, 10: power transmission shaft (input shaft or output shaft), 11: input shaft, 12: output shaft, 40, 41, 42, 43: slider, 80: cam biasing mechanism, 71: cam surface, 81: spring, 82: contact member, 82a: protruding surface section, 82b: cylindrical section, 83: support member, 83a: large diameter portion, 83b: oil hole, 120: communication hole, 131, 132, 133: shift fork, 120c: opening portion, 120a, 120b: opening edge, L1: length of first arc, L2: length of second arc, C: central axial line

## Claims

1. A transmission (1) comprising an input shaft (11) connectable to a driving source and an output shaft (12) connectable to a driving target (4),
on the input shaft (11) and the output shaft (12), shift gears (31-36) being provided to be each rotatable relative to the input shaft (11) or the output shaft (12) and immovable in an axial direction of the input shaft (11) and the output shaft (12), the shift gears (31-36) corresponding to speed stages in number,
on the input shaft (11) and the output shaft (12), sliders (40-43) being provided to be each rotatable together with the input shaft (11) or the output shaft (12), movable in the axial direction of the input shaft (11) and the output shaft (12) by a shift fork (131- 133), and connectable to at least one of the shift gears (31-36),
two of the sliders (40-43) being temporarily in a state of being connected simultaneously with two of the shift gears (31-36) when shifting up, and when the state of being simultaneously connected is established, a force of canceling connection of one of the two sliders (40-43) being generated,
at least one cam biasing mechanism (80) being provided on at least one of the input shaft (11) or the output shaft (12) to impart an elastic force to at least one of the sliders (40-43) in a radial direction of the input shaft (11) or the output shaft (12),
the at least one of the sliders (40-43) having cam surfaces (71) each of which is arranged to convert the elastic force exerted in the radial direction by the at least one cam biasing mechanism (80) into a force acting in the axial direction,
power being transmitted from the input shaft (11) to the output shaft (12) through one of the shift gears (31-36) connected to one of the sliders (40-43) moved by the shift fork (131-133),
wherein the transmission (1) is a constant mesh transmission,
**characterized in that**
at least one of the input shaft (11) or the output shaft (12) including:
a lubricating oil passage (119) which is formed along the axial direction and allows lubricating oil to flow in the lubricating oil passage (119); and
at least one cam biasing mechanism accommodation unit each of which accommodates part of the at least one cam biasing mechanism (80),
the at least one cam biasing mechanism accommodation unit being formed of communication holes (120) each of which has an opening portion (120c) formed in an outer circumferential surface of the input shaft (11) or the output shaft (12) and is connected to the lubricating oil passage (119) at an end on the opposite side of the opening portion (120c), and
when, in a cross section orthogonal to the axial direction, ends of the opening portion (120c) of each of the communication holes (120) formed in the outer circumferential surface of the input shaft (11) or the output shaft (12) are opening edges (120a, 120b),
each of the communication holes (120) is formed so that a first arc is an arc between the opening edges (120a, 120b) neighboring each other in the circumferential direction of the outer circumferential surface and excludes the opening portion (120c) of any of the communication holes (120) being longer than a second arc that is an arc between the opening edges (120a, 120b) at the respective ends of one of the communication holes (120), and the at least one cam biasing mechanism (80) including:
springs (81) which at least a part of each of which is provided in the communication holes (120) each of which is formed so that the first arc is longer than the second arc, each of the springs (81) being configured to impart the elastic force to the cam surfaces (71) of the slider (40-43); and
a support member (83) which is at least partially provided in the lubricating oil passage (119) so that the support member (83) is in contact with the springs (81) and intersects with the lubricating oil passage (119).

2. The transmission (1) according to claim 1, wherein,
each of the sliders (40-43) is configured to be moved in the axial direction by the shift fork (131-133) from a standby position where the slider (40-43) is unconnected to the shift gear (31-36), and
each of the cam surfaces (71) converts the elastic force exerted in the radial direction by the at least one cam biasing mechanism (80) to a force which is exerted in the axial direction to move a slider (40-43) having the cam surface (71) in a direction opposite to a direction toward the standby position from a position to which the slider (40-43) is moved by the shift fork (131-133).

3. The transmission (1) according to claim 1 or 2, wherein,
the at least one cam biasing mechanism accommodation unit is formed of two communication holes (120) formed along a single linear line intersecting with a central axial line of the input shaft (11) or the output shaft (12), and
the at least one of the sliders (40-43) has two cam surfaces (71) which simultaneously receive the elastic force from the at least one cam biasing mechanism (80).

4. The transmission (1) according to any one of claims 1 to 3, wherein, the at least one cam biasing mechanism (80) includes contact members (82) each of which accommodates at least part of each of the springs (81), each of which is at least partially provided in the communication hole (120), and each of which makes contact with a cam surface (71).

5. The transmission (1) according to claim 4, wherein,
each of the communication holes (120) is circular in shape in a cross section orthogonal to a central axial line passing through the center of each of the communication holes (120),
each of the contact members (82) has a protruding surface section (82a) making contact with the cam surface (71) and a cylindrical section (82b) integrated with the protruding surface section (82a), and the protruding surface section (82a) is formed as a part of a spherical surface.

6. The transmission (1) according to claim 5, wherein, the curvature radius of the protruding surface section (82a) of each of the contact members (82) is longer than the radius of each of the communication holes (120).

7. The transmission (1) according to any one of claims 4 to 6, wherein,
each of the communication holes (120) is circular in shape in a cross section orthogonal to a central axial line passing through the center of each of the communication holes (120),
each of the contact members (82) accommodates each of the springs (81) and an end portion of the support member (83), and
the end portion of the support member (83), which is accommodated in each of the contact members (82), has a large diameter portion that is longer in diameter than an open end of each of the contact members (82).

8. The transmission (1) according to any one of claims 1 to 7, wherein,
the support member (83) has an oil hole (83b) through which lubricating oil flows from the lubricating oil passage (119) toward each of the springs (81), and
the at least one cam biasing mechanism (80) is arranged to cause a hydraulic pressure of the lubricating oil flowing out from the oil hole (83b) of the support member (83) to act on each of the cam surfaces (71).

9. The transmission (1) according to any one of claims 1 to 8, wherein,
on the outer circumferential surface of the input shaft (11) or the output shaft (12), a spline having recesses and protrusions which are alternately provided in the circumferential direction is formed,
the at least one of the sliders (40-43) is fitted with the spline to be movable in the axial direction,
when the center of each of the communication holes (120) passes through one of the recesses, a cutout is formed in the spline so that two protrusions neighboring the recess passing through the center of the communication hole (120) form a counterbored shape or two protrusions neighboring the recess passing through the center of the communication hole form a countersunk shape in the axial direction, and
when the center of each of the communication holes (120) passes through one of the protrusions, a cutout is formed in the spline so that the protrusion passing through the center of each of the communication holes (120) forms a countersunk shape.

10. The transmission (1) according to any one of claims 1 to 9, wherein, the sliders (40-43) are slide gears (40-43) each of which has a gear tooth surface engaged with one of the shift gears (31-36).

## Patentansprüche

1. Ein Getriebe (1) mit einer Eingangswelle (11), die mit einer Antriebsquelle verbindbar ist, und einer Ausgangswelle (12), die mit einem Antriebsziel (4) verbindbar ist,
wobei auf der Eingangswelle (11) und der Ausgangswelle (12) Schaltzahnräder (31-36) vorgesehen sind, die jeweils relativ zu der Eingangswelle (11) oder der Ausgangswelle (12) drehbar und in einer axialen Richtung der Eingangswelle (11) und der Ausgangswelle (12) unbeweglich sind, wobei die Schaltzahnräder (31-36) einer Anzahl von Geschwindigkeitsstufen entsprechen,
wobei auf der Eingangswelle (11) und der Ausgangswelle (12) Schieber (40-43) vorgesehen sind, die jeweils zusammen mit der Eingangswelle (11) oder der Ausgangswelle (12) drehbar, in der axialen Richtung der Eingangswelle (11) und der Ausgangswelle (12) durch eine Schaltgabel (131-133) beweglich und mit zumindest einem der Schaltzahnräder (31-36) verbindbar sind,
wobei zwei der Schieber (40-43) vorübergehend in einem Zustand sind, in dem dieselben bei einem Hochschalten gleichzeitig mit zwei der Schaltzahnräder (31-36) verbunden sind, und wenn der Zustand hergestellt ist, in dem dieselben gleichzeitig verbunden sind, eine Kraft zum Aufheben der Verbindung von einem der zwei Schieber (40-43) erzeugt wird,
wobei zumindest ein Nockenvorspannmechanismus (80) auf zumindest einer der Eingangswelle (11) oder der Ausgangswelle (12) vorgesehen ist, um eine elastische Kraft an zumindest einen der Schieber (40-43) in einer radialen Richtung der Eingangswelle (11) oder der Ausgangswelle (12) zu übermitteln,
wobei der zumindest eine der Schieber (40-43) Nockenoberflächen (71) aufweist, von denen jede dahingehend angeordnet ist, die elastische Kraft, die in der radialen Richtung durch den zumindest einen Nockenvorspannmechanismus (80) ausgeübt wird, in eine Kraft umzuwandeln, die in der axialen Richtung wirkt,
wobei Leistung von der Eingangswelle (11) durch eines der Schaltzahnräder (31-36), das mit einem der Schieber (40-43) verbunden ist, der durch die Schaltgabel (131-133) bewegt wird, auf die Ausgangswelle (12) übertragen wird,
wobei das Getriebe (1) ein Schubklauengetriebe ist,
**dadurch gekennzeichnet, dass**
zumindest eine der Eingangswelle (11) oder der Ausgangswelle (12) folgende Merkmale umfasst:
einen Schmieröldurchlass (119), der entlang der axialen Richtung gebildet ist und ermöglicht, dass Schmieröl in dem Schmieröldurchlass (119) fließt; und
zumindest eine Nockenvorspannmechanismus-Aufnahmeeinheit, von der jede einen Teil des zumindest einen Nockenvorspannmechanismus (80) aufnimmt,
wobei die zumindest eine Nockenvorspannmechanismus-Aufnahmeeinheit aus Verbindungsausnehmungen (120) gebildet ist, von denen jede einen Öffnungsabschnitt (120c) aufweist, der in einer äußeren Umfangsoberfläche der Eingangswelle (11) oder der Ausgangswelle (12) gebildet ist und mit dem Schmieröldurchlass (119) an einem Ende auf der gegenüberliegenden Seite des Öffnungsabschnitts (120c) verbunden ist, und
dann, wenn in einem Querschnitt orthogonal zu der axialen Richtung Enden des Öffnungsabschnitts (120c) jeder der Verbindungsausnehmungen (120), die in der äußeren Umfangsoberfläche der Eingangswelle (11) oder der Ausgangswelle (12) gebildet sind, Öffnungsränder (120a, 120b) sind,
jede der Verbindungsausnehmungen (120) derart gebildet ist, dass ein erster Bogen ein Bogen zwischen den Öffnungsrändern (120a, 120b) ist, die in der Umfangsrichtung der äußeren Umfangsoberfläche miteinander benachbart sind, und den Öffnungsabschnitt (120c) einer der Verbindungsausnehmungen (120) ausschließt, der länger als ein zweiter Bogen ist, der ein Bogen zwischen den Öffnungsrändern (120a, 120b) an den jeweiligen Enden einer der Verbindungsausnehmungen (120) ist, und
wobei der zumindest eine Nockenvorspannmechanismus (80) folgende Merkmale umfasst:
Federn (81), von denen zumindest ein Teil jeweils in den Verbindungsausnehmungen (120) vorgesehen ist, von denen jede derart gebildet ist, dass der erste Bogen länger als der zweite Bogen ist, wobei jede der Federn (81) dazu ausgebildet ist, die elastische Kraft an die Nockenoberflächen (71) des Schiebers (40-43) zu übermitteln; und
ein Trägerbauglied (83), das zumindest teilweise in dem Schmieröldurchlass (119) vorgesehen ist, sodass das Trägerbauglied (83) mit den Federn (81) in Kontakt ist und den Schmieröldurchlass (119) schneidet.

2. Das Getriebe (1) gemäß Anspruch 1, wobei
jeder der Schieber (40-43) dazu ausgebildet ist, in der axialen Richtung durch die Schaltgabel (131-133) aus einer Bereitschaftsposition bewegt zu werden, in der der Schieber (40-43) nicht mit dem Schaltzahnrad (31-36) verbunden ist, und
jede der Nockenoberflächen (71) die elastische Kraft, die in der radialen Richtung durch den zumindest einen Nockenvorspannmechanismus (80) ausgeübt wird, in eine Kraft umwandelt, die in der axialen Richtung ausgeübt wird, um einen Schieber (40-43), der die Nockenoberfläche (71) aufweist, in einer Richtung entgegengesetzt zu einer Richtung hin zu der Bereitschaftsposition aus einer Position zu bewegen, in die der Schieber (40-43) durch die Schaltgabel (131-133) bewegt wird.

3. Das Getriebe (1) gemäß Anspruch 1 oder 2, wobei
die zumindest eine Nockenvorspannmechanismus-Aufnahmeeinheit aus zwei Verbindungsausnehmungen (120) gebildet ist, die entlang einer einzelnen linearen Linie gebildet sind, die sich mit einer zentralen axialen Linie der Eingangswelle (11) oder der Ausgangswelle (12) schneidet, und
der zumindest eine der Schieber (40-43) zwei Nockenoberflächen (71) aufweist, die gleichzeitig die elastische Kraft von dem zumindest einen Nockenvorspannmechanismus (80) empfangen.

4. Das Getriebe (1) gemäß einem der Ansprüche 1 bis 3, wobei der zumindest eine Nockenvorspannmechanismus (80) Kontaktbauglieder (82) umfasst, von denen jedes zumindest einen Teil von jeder der Federn (81) aufnimmt, von denen jede zumindest teilweise in der Verbindungsausnehmung (120) vorgesehen ist und von denen jede mit einer Nockenoberfläche (71) in Kontakt ist.

5. Das Getriebe (1) gemäß Anspruch 4, wobei
jede der Verbindungsausnehmungen (120) in einem Querschnitt orthogonal zu einer zentralen axialen Linie, die durch die Mitte von jeder der Verbindungsausnehmungen (120) verläuft, eine kreisförmige Form aufweist,
jedes der Kontaktbauglieder (82) ein vorstehendes Oberflächensegment (82a), das mit der Nockenoberfläche (71) in Kontakt ist, und ein zylindrisches Segment (82b) aufweist, das mit dem vorstehenden Oberflächensegment (82a) integriert ist, und
das vorstehende Oberflächensegment (82a) als ein Teil einer sphärischen Oberfläche gebildet ist.

6. Das Getriebe (1) gemäß Anspruch 5, wobei der Krümmungsradius des vorstehenden Oberflächensegments (82a) von jedem der Kontaktbauglieder (82) länger als der Radius von jeder der Verbindungsausnehmungen (120) ist.

7. Das Getriebe (1) gemäß einem der Ansprüche 4 bis 6, wobei
jede der Verbindungsausnehmungen (120) in einem Querschnitt orthogonal zu einer zentralen axialen Linie, die durch die Mitte von jeder der Verbindungsausnehmungen (120) verläuft, eine kreisförmige Form aufweist,
jedes der Kontaktbauglieder (82) jede der Federn (81) und einen Endabschnitt des Trägerbauglieds (83) aufnimmt, und
der Endabschnitt des Trägerbauglieds (83), das in jedem der Kontaktbauglieder (82) aufgenommen ist, einen Abschnitt mit großem Durchmesser aufweist, der im Durchmesser länger als ein offenes Ende von jedem der Kontaktbauglieder (82) ist.

8. Das Getriebe (1) gemäß einem der Ansprüche 1 bis 7, wobei
das Trägerbauglied (83) eine Ölausnehmung (83b) aufweist, durch die Schmieröl von dem Schmieröldurchlass (119) zu jeder der Federn (81) fließt, und
der zumindest eine Nockenvorspannmechanismus (80) dahingehend angeordnet ist, zu bewirken, dass ein Hydraulikdruck des Schmieröls, das aus der Ölausnehmung (83b) des Trägerbauglieds (83) herausfließt, auf jede der Nockenoberflächen (71) wirkt.

9. Das Getriebe (1) gemäß einem der Ansprüche 1 bis 8, wobei
auf der äußeren Umfangsoberfläche der Eingangswelle (11) oder der Ausgangswelle (12) eine Nut mit Aussparungen und Vorsprüngen gebildet ist, die in der Umfangsrichtung abwechselnd vorgesehen sind,
der zumindest eine der Schieber (40-43) mit der Nut versehen ist, um in der axialen Richtung bewegbar zu sein,
dann, wenn die Mitte von jeder der Verbindungsausnehmungen (120) durch eine der Aussparungen verläuft, ein Ausschnitt in der Nut derart gebildet ist, dass zwei Vorsprünge benachbart zu der Aussparung, die durch die Mitte der Verbindungsausnehmung (120) verläuft, eine aufgebohrte Form bilden oder zwei Vorsprünge benachbart zu der Aussparung, die durch die Mitte der Verbindungsausnehmung verläuft, eine versenkte Form in der axialen Richtung bilden, und
dann, wenn die Mitte von jeder der Verbindungsausnehmungen (120) durch einen der Vorsprünge verläuft, ein Ausschnitt in der Nut derart gebildet ist, dass der Vorsprung, der durch die Mitte von jeder der Verbindungsausnehmungen (120) verläuft, eine versenkte Form bildet.

10. Das Getriebe (1) gemäß einem der Ansprüche 1 bis 9, wobei die Schieber (40-43) Schiebezahnräder (40-43) sind, von denen jedes eine Zahnradzahnoberfläche aufweist, die mit einem der Schaltzahnräder (31-36) in Eingriff steht.

## Revendications

1. Transmission (1) comprenant un arbre d'entrée (11) pouvant être connecté à une source d'entraînement et un arbre de sortie (12) pouvant être connecté à une cible entraînée (4),
sur l'arbre d'entrée (11) et l'arbre de sortie (12), des pignons de changement de vitesse (31-36) étant prévus pour être chacun rotatifs par rapport à l'arbre d'entrée (11) ou à l'arbre de sortie (12) et immobiles dans une direction axiale de l'arbre d'entrée (11) et de l'arbre de sortie (12), les pignons de changement de vitesse (31-36) correspondant à un certain nombre d'étages de vitesse,
sur l'arbre d'entrée (11) et l'arbre de sortie (12), des coulisseaux (40-43) étant prévus pour être chacun rotatifs ensemble avec l'arbre d'entrée (11) ou l'arbre de sortie (12), mobiles dans la direction axiale de l'arbre d'entrée (11) et de l'arbre de sortie (12) par une fourchette de changement de vitesse (131-133), et pouvant être connectés à au moins un des pignons de changement de vitesse (31-36),
deux des coulisseaux (40-43) étant temporairement dans un état de connexion simultanée avec deux des pignons de changement de vitesse (31- 36) lors du passage à la vitesse supérieure, et lorsque l'état d'être en connexion simultanée est établi, une force d'annulation de connexion de l'un des deux coulisseaux (40-43) étant générée,
au moins un mécanisme de sollicitation de came (80) étant fourni sur au moins l'un de l'arbre d'entrée (11) ou l'arbre de sortie (12) pour communiquer une force élastique à l'au moins un des coulisseaux (40-43) dans une direction radiale de l'arbre d'entrée (11) ou de l'arbre de sortie (12),
l'au moins un des coulisseaux (40-43) présentant des surfaces de came (71) dont chacune est agencée pour convertir la force élastique exercée dans la direction radiale par l'au moins un mécanisme de sollicitation de came (80) en une force agissant dans la direction axiale,
la puissance étant transmise de l'arbre d'entrée (11) à l'arbre de sortie (12) par l'intermédiaire de l'un des pignons de changement de vitesse (31-36) connecté à l'un des coulisseaux (40-43) actionné par la fourchette de changement de vitesse (131-133),
dans laquelle la transmission (1) est une transmission à maille constante,
**caractérisée en ce que**
au moins un parmi l'arbre d'entrée (11) et l'arbre de sortie (12) incluant :
un canal d'huile de lubrification (119) qui est formé le long de la direction axiale et permet à l'huile de lubrification de s'écouler dans le canal d'huile de lubrification (119) ; et
au moins une unité de logement pour mécanisme de sollicitation de came, qui contient une partie de l'au moins un mécanisme de sollicitation de came (80),
l'au moins une unité de logement pour mécanisme de sollicitation de came, étant formée d'orifices de communication (120) dont chacun présente une partie d'ouverture (120c) formée dans une surface circonférentielle extérieure de l'arbre d'entrée (11) ou de l'arbre de sortie (12) et est connectée au canal d'huile de lubrification (119) à une extrémité située du côté opposé à la partie d'ouverture (120c), et
lorsque, dans une section transversale orthogonale à la direction axiale, les extrémités de la partie d'ouverture (120c) de chacun des orifices de communication (120) formés dans la surface circonférentielle extérieure de l'arbre d'entrée (11) ou de l'arbre de sortie (12) sont des bords d'ouverture (120a, 120b),
chacun des orifices de communication (120) est formé de sorte qu'un premier arc est un arc entre les bords d'ouverture (120a, 120b) voisins l'un de l'autre dans la direction circonférentielle de la surface circonférentielle extérieure, et exclut la partie d'ouverture (120c) de l'un quelconque des orifices de communication (120) qui est plus longue qu'un deuxième arc, qui est un arc entre les bords d'ouverture (120a, 120b) aux extrémités respectives de l'un des orifices de communication (120), et
l'au moins un mécanisme de sollicitation de came (80) incluant :
des ressorts (81) dont au moins une partie de chacun est fournie dans les orifices de communication (120), dont chacun est formé de sorte que le premier arc est plus long que le deuxième arc, chacun des ressorts (81) étant configuré pour communiquer la force élastique aux surfaces de came (71) du coulisseau (40-43) ; et
un élément de support (83) qui est au moins partiellement fourni dans le canal d'huile de lubrification (119), de sorte que l'élément de support (83) soit en contact avec les ressorts (81) et croise le passage d'huile de lubrification (119).

2. Transmission (1) selon la revendication 1, dans laquelle
chacun des coulisseaux (40-43) est configuré pour être déplacé dans la direction axiale par la fourchette de changement de vitesse (131-133) depuis une position de repos dans laquelle le coulisseau (40-43) n'est pas connecté au pignon de changement de vitesse (31-36), et
chacune des surfaces de came (71) convertit la force élastique exercée dans la direction radiale par l'au moins un mécanisme de sollicitation de came (80) à une force qui est exercée dans la direction axiale pour déplacer un coulisseau (40-43) présentant la surface de came (71) dans une direction opposée à une direction vers la position de repos, à partir d'une position vers laquelle le coulisseau (40-43) est déplacé par la fourchette de changement de vitesse (131-133).

3. Transmission (1) selon la revendication 1 ou 2, dans laquelle
l'au moins une unité de logement du mécanisme de sollicitation de came est constituée de deux orifices de communication (120) formés le long d'une seule ligne linéaire coupant une ligne axiale centrale de l'arbre d'entrée (11) ou de l'arbre de sortie (12), et
au moins l'un des coulisseaux (40-43) présente deux surfaces de came (71) qui reçoivent simultanément la force élastique provenant de l'au moins un mécanisme de sollicitation de came (80).

4. Transmission (1) selon l'une quelconque des revendications 1 à 3, dans laquelle l'au moins un mécanisme de sollicitation de came (80) inclut des éléments de contact (82) dont chacun loge au moins une partie de chacun des ressorts (81), dont chacun est au moins partiellement fourni dans l'orifice de communication (120), et dont chacun est en contact avec une surface de came (71).

5. Transmission (1) selon la revendication 4, dans laquelle
chacun des orifices de communication (120) présente une forme circulaire en coupe transversale orthogonale à une ligne axiale centrale passant par le centre de chacun des orifices de communication (120),
chacun des éléments de contact (82) présente une section de surface en saillie (82a) entrant en contact avec la surface de came (71) et une section cylindrique (82b) intégrée à la partie de surface en saillie (82a), et
la section de surface en saillie (82a) est formée en tant que partie d'une surface sphérique.

6. Transmission (1) selon la revendication 5, dans laquelle le rayon de courbure de la section de surface en saillie (82a) de chacun des éléments de contact (82) est supérieur au rayon de chacun des orifices de communication (120).

7. Transmission (1) selon l'une quelconque des revendications 4 à 6, dans laquelle
chacun des orifices de communication (120) présente une forme circulaire en coupe transversale orthogonale à une ligne axiale centrale passant par le centre de chacun des orifices de communication (120),
chacun des éléments de contact (82) loge chacun des ressorts (81) ainsi qu'une partie d'extrémité de l'élément de support (83), et
la partie d'extrémité de l'élément de support (83), qui est logée dans chacun des éléments de contact (82), présente une partie de grand diamètre dont le diamètre est supérieur à celui d'une extrémité ouverte de chacun des éléments de contact (82).

8. Transmission (1) selon l'une quelconque des revendications 1 à 7, dans laquelle
l'élément de support (83) présente un orifice d'huile (83b) à travers lequel l'huile de lubrification s'écoule depuis le canal d'huile de lubrification (119) vers chacun des ressorts (81), et
l'au moins un mécanisme de sollicitation de came (80) est agencé de manière à ce qu'une pression hydraulique de l'huile de lubrification s'écoulant par l'orifice d'huile (83b) de l'élément de support (83) agisse sur chacune des surfaces de came (71).

9. Transmission (1) selon l'une quelconque des revendications 1 à 8, dans laquelle
sur la surface circonférentielle extérieure de l'arbre d'entrée (11) ou de l'arbre de sortie (12) est formée une cannelure présentant des évidements et des saillies disposés en alternance dans la direction circonférentielle,
l'au moins un des coulisseaux (40-43) est monté avec la cannelure de manière à pouvoir se déplacer dans la direction axiale,
lorsque le centre de chacun des orifices de communication (120) passe par l'un des évidements, une découpe est formée dans la cannelure de telle sorte que deux saillies voisines de l'évidement traversé par le centre de l'orifice de communication (120) forment une forme contre-alésée ou que deux saillies voisines de l'évidement traversé par le centre de l'orifice de communication forment une forme fraisée dans la direction axiale, et
lorsque le centre de chacun des orifices de communication (120) passe à travers l'une des saillies, une découpe est formée dans la cannelure de sorte que la saillie passant par le centre de chacun des orifices de communication (120) présente une forme fraisée.

10. Transmission (1) selon l'une quelconque des revendications 1 à 9, dans laquelle les coulisseaux (40-43) sont des pignons coulissants (40-43) dont chacun présente une surface dentée en prise avec l'un des pignons de changement de vitesse (31-36).
